# FASCICULE DE BREVET EUROPEEN

(11) **EP 3 732 765 B1**
(45) Date de publication et mention de la délivrance du brevet: **25.11.2026**
(21) Numéro de dépôt: 18842451.9
(22) Date de dépôt: 24.12.2018
(51) Int. Cl.: H02J 7/00

(54) **BATTERIE D'ACCUMULATEURS ÉLECTRIQUES**
AKKUMULATOR
ELECTRICAL ACCUMULATOR BATTERY

(30) Priorité: 27.12.2017 FR 1763253
(43) Date de publication de la demande: 04.11.2020
(73) Titulaire: Commissariat à l'Energie Atomique et aux Energies Alternatives, 75015 Paris (FR)
(72) Inventeur: THOMAS, Remy, 38130 ECHIROLLES (FR); FERNANDEZ, Eric, 38760 SAINT PAUL DE VARCES (FR); BACQUET, Sylvain, 38470 CHASSELAY (FR); CASSARINO, Leandro, 33400 TALENCE (FR); DESPESSE, Ghislain, 38340 VOREPPE (FR); LOPEZ, Yan, 38140 RENAGE (FR)
(74) Mandataire: Cabinet Beaumont
(86) Numéro de dépôt international: PCT/FR2018/053547
(87) Numéro de publication internationale: WO 2019/129994

(56) Documents cités:
- WO-A2-2012/030455
- WO-A2-2012/117110
- GB-A- 2 537 616
- US-A1- 2013 253 715

## Description

### Domaine

La présente invention concerne une batterie d'accumulateurs électriques, également appelée pack batterie.

### Exposé de l'art antérieur

Il est connu de réaliser une batterie comprenant plusieurs étages ou modules dans chacun desquels des accumulateurs, également appelés cellules, peuvent être connectés en série ou en parallèle par des interrupteurs commandables. Une telle batterie est adaptée à fournir une tension dont la forme d'onde peut varier dans le temps en faisant varier au cours du temps la connexion des cellules via la fermeture ou l'ouverture des interrupteurs.

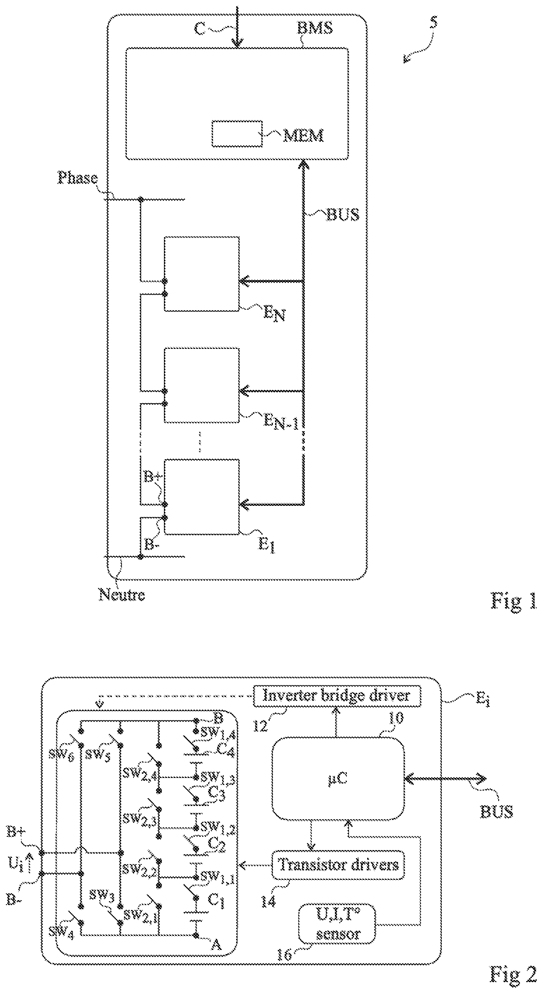

La figure 1 représente un exemple d'une telle batterie 5. La batterie 5 comprend N modules E₁ à E_{N}. Le nombre N est un nombre entier pouvant être compris entre 1 et 50. Chaque module comprend une borne positive B+ et une borne négative B- et plusieurs cellules, non représentées, pouvant être connectées entre elles en série et/ou en parallèle par l'intermédiaire d'interrupteurs, non représentés, entre les bornes B+ et B-. Les modules E₁ à E_{N} peuvent être connectés en série entre une première borne Neutre de la batterie 5 et une deuxième borne Phase de la batterie 5. Un exemple d'une telle batterie est décrit dans la demande de brevet WO 2012/117110. Un autre exemple de l'état de la tacnnique est GB2537616.

La batterie 5 comprend un circuit BMS de commande des modules E₁ à E_{N}, appelé circuit de commande maître par la suite. Le circuit de commande maître BMS peut échanger des données avec chaque module E₁ à E_{N} par l'intermédiaire d'un bus bidirectionnel BUS de transmission de données. Chaque module E₁ à E_{N} comprend un circuit adapté à commander les interrupteurs du module à partir des commandes fournies par le circuit de commande maître BMS. Ce circuit de commande est appelé circuit de commande esclave par la suite.

Chaque module peut comprendre, en outre, des capteurs, non représentés, par exemple des capteurs de la tension aux bornes de chaque cellule du module, des capteurs du courant fourni par chaque cellule du module et/ou des capteurs de la température de chaque cellule du module. Le circuit de commande esclave de chaque module E₁ à E_{N} est adapté à transmettre au circuit de commande maître BMS des données représentatives des mesures de tensions, de courants et/ou de températures par le bus de transmission de données BUS. Le circuit de commande maître BMS peut, en outre, comprendre un capteur de la tension entre les bornes phase et neutre ainsi qu'un capteur de courant global et un capteur de température.

Le circuit de commande maître BMS est adapté à recevoir une consigne C, et à sélectionner les cellules à connecter ou à déconnecter pour chaque module de façon à répondre à la consigne. La consigne C peut être une consigne de tension ou de courant, les cellules à connecter ou à déconnecter pour chaque module étant alors sélectionnées pour obtenir la tension et/ou le courant souhaités entre les bornes Phase et Neutre de la batterie 5. A titre de variante, la consigne C peut être une consigne d'un nombre d'accumulateurs à connecter en série et/ou en parallèle entre les bornes Phase et Neutre de la batterie 5, les cellules à connecter ou à déconnecter pour chaque module étant alors sélectionnées pour obtenir le nombre d'accumulateurs connectées en série et/ou en parallèle entre les bornes Phase et Neutre de la batterie 5 demandé par la consigne. Le circuit de commande maître BMS fournit alors des commandes aux modules par l'intermédiaire du bus de transmission de données BUS à partir desquelles le circuit de commande esclave de chaque module connecte ou déconnecte les cellules selon la configuration souhaitée.

Il est souhaitable que la sélection des cellules à connecter/déconnecter soit réalisée en assurant que chaque cellule fonctionne dans sa plage de fonctionnement optimale en fonction des mesures de tensions, de courants et de température fournies par les modules. En particulier, il est souhaitable de réaliser un équilibrage des cellules, c'est-à-dire que la sélection des cellules soit réalisée de façon que les écarts entre les états de charge des cellules soient en permanence les plus faibles possibles, et/ou que les écarts entre les courants pouvant être fournis par les cellules soient en permanence les plus faibles possibles et/ou que les écarts entre les températures des cellules soient en permanence les plus faibles possibles. Il est en outre souhaitable que la sélection des cellules tienne compte d'une éventuelle défaillance d'une cellule de façon, par exemple, à exclure cette cellule de la sélection.

Pour effectuer la fonction d'équilibrage, le circuit de commande maître BMS peut déterminer un classement des cellules selon des niveaux de priorité, les cellules les plus prioritaires du classement étant celles qui devraient être sélectionnées les premières. Le classement de priorités, également appelé table de priorités, est susceptible d'évoluer au cours du fonctionnement de la batterie, notamment suite à l'évolution des états de charges des cellules ou suite à la défaillance d'une cellule.

Il est souhaitable que le circuit de commande maître BMS tienne compte du classement de priorités lors de la détermination de la sélection de cellules et en particulier tienne compte de l'évolution du classement de priorités dans le temps. Le classement de priorités peut dépendre du fait que la batterie est en charge ou en décharge.

Pour certaines applications, la consigne reçue par le circuit de gestion BMS peut varier rapidement de sorte qu'il peut être difficile pour le circuit de commande maître BMS de sélectionner les cellules à connecter/déconnecter pour suivre la consigne tout en prenant en compte une modification du classement de priorités.

### Résumé

L'invention est définie par les caractéristiques des revendications indépendantes. Les caractéristiques préférées sont définies dans les revendications dépendantes. Ainsi, un objet d'un mode de réalisation est de prévoir une batterie qui pallie au moins certains des inconvénients des batteries décrites précédemment.

Un autre objet d'un mode de réalisation est que la transmission des commandes du circuit de commande maître de la batterie aux circuits de commande esclaves des modules pour suivre la consigne ne soit pas perturbée par la modification du classement de priorités.

Ainsi, un mode de réalisation prévoit un procédé de commande d'une batterie comprenant un premier circuit de commande et plusieurs modules disposés en série entre des première et deuxième bornes, chaque module comprenant des troisième et quatrième bornes, au moins l'une des troisième et quatrième bornes de chaque module étant reliée à l'une des troisième et quatrième bornes d'un autre module, chaque module comprenant des accumulateurs électriques et des interrupteurs reliant les accumulateurs électriques entre eux et aux troisième et quatrième bornes du module et un deuxième circuit de commande des interrupteurs, la batterie comprenant en outre au moins un premier bus de transmission de données reliant le premier circuit de commande à chaque deuxième circuit de commande, le procédé comprenant la détermination par le premier circuit de commande d'une première table de priorités associée à une opération de charge de la batterie et d'une deuxième table de priorités associée à une opération de décharge de la batterie, la première table de priorités comprenant un premier classement de priorités des accumulateurs électriques pour l'opération de charge et la deuxième table de priorités comprenant un deuxième classement de priorités des accumulateurs électriques pour l'opération de décharge, le procédé comprenant les étapes successives suivantes :
a) réception par le premier circuit de commande d'une consigne ; et
b) détermination de premières commandes de connexion ou de déconnexion d'au moins l'un des accumulateurs électriques des modules pour suivre ladite consigne en fonction du premier classement lorsque la batterie est en charge et en fonction du deuxième classement lorsque la batterie est en décharge.

Selon un mode de réalisation, la consigne est choisie dans le groupe comprenant une consigne de fourniture d'une tension entre les première et deuxième bornes, une consigne de fourniture d'un courant à la première borne ou une consigne de nombre d'accumulateurs électriques.

Selon un mode de réalisation, la batterie comprend une mémoire dans laquelle sont stockées des listes chaînées, chaque liste chaînée comprenant des éléments comprenant chacun un identifiant de l'un des accumulateurs électriques et au moins un premier pointeur désignant un autre élément de la liste chaînée, une première liste chaînée parmi les listes chaînées étant associée à une opération de charge de la batterie et une deuxième liste chaînée parmi les listes chaînées étant associée à une opération de décharge de la batterie. L'étape b) comprend la détermination des premières commandes de connexion ou de déconnexion d'au moins l'un des accumulateurs électriques des modules pour suivre ladite consigne à partir de la première liste chaînée lorsque la batterie est en charge et de la deuxième liste chaînée lorsque la batterie est en décharge.

Selon un mode de réalisation, le procédé comprend la détermination par le premier circuit de commande, pour au moins un premier élément parmi les éléments de l'une des listes chaînées, d'une nouvelle valeur d'un deuxième pointeur désignant un deuxième élément de la liste chaînée ou un troisième élément d'une autre liste chaînée. L'étape b) comprend les étapes successives suivantes :
c) déterminer si les premier et deuxième pointeurs dudit élément sont différents ; et
d) dans le cas où les premier et deuxième pointeurs sont différents, remplacer le premier pointeur par le deuxième pointeur et déterminer des deuxièmes commandes de connexion ou de déconnexion de l'accumulateur électrique correspondant à l'identifiant du premier élément.

Selon un mode de réalisation, l'étape d) comprend, dans le cas de la connexion de l'accumulateur électrique correspondant à l'identifiant du premier élément, la transmission de deuxièmes commandes de déconnexion de l'accumulateur électrique correspondant à l'identifiant d'un cinquième élément et dans le cas de la déconnexion de l'accumulateur électrique correspondant à l'identifiant du premier élément, la transmission de deuxièmes commandes de connexion de l'accumulateur électrique correspondant à l'identifiant d'un cinquième élément.

Selon un mode de réalisation, le premier circuit de commande comprend une mémoire dans laquelle sont stockées, pour chaque accumulateur électrique, un identifiant de l'accumulateur électrique, un premier niveau de priorité de connexion de l'accumulateur électrique parmi des niveaux de priorité pour une opération de charge et un deuxième niveau de priorité de connexion de l'accumulateur électrique parmi les niveaux de priorité pour une opération de décharge. L'étape b) comprend les étapes successives suivantes :
e) transmission, par le premier circuit de commande aux deuxièmes circuits de commande, de premières commandes de connexion ou de déconnexion d'au moins l'un des accumulateurs électriques des modules pour suivre ladite consigne ; et
f) transmission, par le premier circuit de commande aux deuxièmes circuits de commande, de deuxièmes commandes de connexion de l'un des accumulateurs électriques et de déconnexion d'un autre accumulateur électrique parmi les accumulateurs électriques.

Selon un mode de réalisation, les lignes de la mémoire relatives aux premiers niveaux de priorité sont agencées selon des rangs croissants et les lignes de la mémoire relatives aux deuxièmes niveaux de priorité sont agencées selon des rangs croissants. L'étape f) comprend les étapes successives suivantes :
g) intervertir des première et deuxième lignes de la mémoire si le niveau de priorité de l'accumulateur électrique, parmi les premiers niveaux de priorité lors d'une opération de charge et parmi les deuxièmes niveaux de priorité lors d'une opération de décharge, à la première ligne est supérieur au rang de la première ligne ; et
h) transmettre, par le premier circuit de commande aux deuxièmes circuits de commande, les deuxièmes commandes de connexion de l'accumulateur électrique ayant l'identifiant à la deuxième ligne avant l'interversion et de déconnexion de l'accumulateur électrique ayant l'identifiant à la première ligne avant l'interversion dans le cas où l'accumulateur électrique ayant l'identifiant à la deuxième ligne avant l'interversion est déconnecté et l'accumulateur électrique ayant l'identifiant à la première ligne avant l'interversion est connecté.

Selon un mode de réalisation, le premier circuit de commande utilise un premier pointeur désignant une troisième ligne de la mémoire. A l'étape a), le circuit de commande modifie le pointeur pour désigner une quatrième ligne de la mémoire, le nombre de lignes entre la troisième ligne et la quatrième ligne, en comptant la quatrième ligne, étant égal au nombre d'accumulateurs à connecter ou à déconnecter pour suivre la consigne.

Selon un mode de réalisation, le premier circuit de commande utilise un deuxième pointeur désignant une cinquième ligne de la mémoire et le premier circuit de commande modifie le deuxième pointeur pour désigner une sixième ligne de la mémoire adjacente à la cinquième ligne lorsque le niveau de priorité de l'accumulateur électrique à la cinquième ligne est égal au rang de la cinquième ligne.

Selon un mode de réalisation, le procédé comprend la transmission, par le premier circuit de commande aux deuxièmes circuits de commande, de premières données représentatives d'une configuration d'accumulateurs électriques à obtenir pour suivre la consigne, les deuxièmes circuit de commande connectant ou déconnectant les accumulateurs électriques à partir desdites premières données et d'un premier classement de priorités des accumulateurs électriques pour une opération de charge ou d'un deuxième classement de priorités des accumulateurs électriques pour une opération de décharge. Le procédé comprend, en outre, les étapes suivantes :
i) détermination par le premier circuit de commande d'une nouvelle version du premier et/ou deuxième classement de priorités ;
j) transmission, par le premier circuit de commande à chaque deuxième circuit de commande, de deuxièmes données représentatives d'au moins une partie de la nouvelle version du premier et/ou deuxième classement de priorités ;
k) transmission, par chaque deuxième circuit de commande au premier circuit de commande, de troisièmes données indiquant la réception par le deuxième circuit de commande de ladite au moins une partie de la nouvelle version du premier et/ou deuxième classement de priorités ; et
l) transmission, par le premier circuit de commande aux deuxièmes circuits de commande, d'une commande d'utilisation de la nouvelle version du premier et/ou deuxième classement de priorités.

Un mode de réalisation prévoit également une batterie comprenant un premier circuit de commande et plusieurs modules disposés en série entre des première et deuxième bornes, chaque module comprenant des troisième et quatrième bornes, au moins l'une des troisième et quatrième bornes de chaque module étant reliée à l'une des troisième et quatrième bornes d'un autre module, chaque module comprenant des accumulateurs électriques et des interrupteurs reliant les accumulateurs électriques entre eux et aux troisième et quatrième bornes du module et un deuxième circuit de commande des interrupteurs, la batterie comprenant en outre au moins un premier bus de transmission de données reliant le premier circuit de commande à chaque deuxième circuit de commande, la batterie comprenant une mémoire, le premier circuit de commande étant configuré pour déterminer une première table de priorités associée à une opération de charge de la batterie et une deuxième table de priorités associée à une opération de décharge de la batterie, la première table de priorités comprenant un premier classement de priorités des accumulateurs électriques pour l'opération de charge et la deuxième table de priorités comprenant un deuxième classement de priorités des accumulateurs électriques pour l'opération de décharge, le premier circuit de commande étant configuré pour recevoir une consigne et le premier circuit de commande ou chaque deuxième circuit de commande étant configuré pour déterminer des premières commandes de connexion ou de déconnexion d'au moins l'un des accumulateurs électriques des modules pour suivre ladite consigne en fonction du premier classement lorsque la batterie est en charge et en fonction du deuxième classement lorsque la batterie est en décharge.

Selon un mode de réalisation, la batterie comprend un deuxième bus de transmission de données reliant le premier circuit de commande à chaque deuxième circuit de commande. Le premier circuit de commande est configuré pour transmettre des premières données aux deuxièmes circuits de commande par le premier bus à un premier débit et est configuré pour transmettre des deuxièmes données aux deuxièmes circuits de commande par le deuxième bus à un deuxième débit inférieur au premier débit.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, décrite précédemment, représente, de façon partielle et schématique, un exemple d'une batterie d'accumulateurs ;
la figure 2 représente, de façon partielle et schématique, un mode de réalisation d'un module de la batterie de la figure 1 ;
la figure 3 représente de façon schématique un élément 20 d'une liste chaînée utilisée lors du fonctionnement de la batterie représentée en figure 1 ;
la figure 4 représente, de façon partielle et schématique, un exemple de l'une des listes chaînées utilisées lors du fonctionnement de la batterie représentée en figure 1 ;
la figure 5 est un schéma par blocs illustrant un procédé de connexion/déconnexion des cellules de la batterie représentée en figure 1 ;
la figure 6 représente, de façon partielle et schématique, un autre mode de réalisation d'une batterie d'accumulateurs ;
la figure 7 est un chronogramme illustrant les données échangées entre le circuit de commande maître et les circuits de commande esclaves de la batterie représentée en figure 2 pour un mode de réalisation d'un procédé de commande de la batterie ; et
la figure 8 est un chronogramme illustrant les données échangées entre le circuit de commande maître et les circuits de commande esclaves de la batterie représentée en figure 1 pour un mode de réalisation d'un procédé de commande de la batterie.

### Description détaillée

De mêmes éléments ont été désignés par de mêmes références dans les différentes figures. Par souci de clarté, seuls les éléments utiles à la compréhension des modes de réalisation décrits ont été représentés et sont détaillés. En particulier, les fonctions classiques réalisées par un circuit de commande maître d'une batterie d'accumulateurs telles que l'équilibrage des cellules sont bien connues de l'homme du métier et ne sont pas décrites plus en détail par la suite. Dans la suite de la description, les expressions "sensiblement", "environ", "approximativement" et "de l'ordre de" signifient "à 10 % près", de préférence à 5 % près.

Le circuit de commande maître BMS peut correspondre à un circuit dédié et/ou peut comprendre un processeur, par exemple un microprocesseur ou un microcontrôleur, adapté à exécuter des instructions d'un programme d'ordinateur stocké dans une mémoire. Le circuit de commande maître BMS comprend notamment une mémoire MEM de stockage de données.

Un mode de réalisation d'un procédé de commande d'un système à cellules commutées va être décrit dans le cas d'une batterie à accumulateurs commutés pour laquelle les cellules correspondent à des accumulateurs commutés. Toutefois, les présents modes de réalisation s'appliquent à tout type de système à cellules commutées adapté à fournir une tension variable à une charge. Chaque cellule du système à cellules commutées peut correspondre à un élément de stockage de charges électriques ou à un générateur électrique. Un exemple d'élément de stockage de charges électriques est par exemple un accumulateur électrique ou un condensateur. Un exemple de générateur électrique est par exemple une pile à combustible, une pile zinc-air, une cellule photovoltaïque ou un système de récupération d'énergie, notamment une mini-éolienne ou une mini-turbine. Le système à cellules commutées peut comprendre seulement des éléments de stockage de charges électriques, seulement des générateurs électriques ou à la fois des éléments de stockage de charges électriques et des générateurs électriques. Lorsque le système à cellules commutées comprend seulement des générateurs électriques, l'utilisation est théoriquement seulement en mode décharge. Néanmoins, en cas de puissance réactive, pour des brefs passages par une puissance négative à chaque période, l'inertie du générateur peut suffire à lisser la puissance, par exemple en raison de l'inertie de rotation et des capacités parasites. En outre, chaque générateur peut être connecté en parallèle d'un élément résistif, afin d'accepter des puissances négatives, en dissipant cette énergie. En fonctionnement, le système est destiné à être relié à un dispositif qui absorbe ou fournit de la puissance selon l'application envisagée. A titre d'exemple, ce dispositif correspond à une machine électrique, par exemple à un moteur électrique, ou au réseau de distribution électrique.

La figure 2 représente un mode de réalisation du module Eᵢ, où i varie de 1 à N.

Selon le présent mode de réalisation, le module Eᵢ est adapté à fournir une tension Uᵢ entre la borne positive B+ et la borne négative B-. Le module Eᵢ comprend des cellules C₁ à C_{M} où M est un nombre entier compris entre 2 et 10, de préférence entre 2 et 5, quatre cellules C₁, C₂, C₃ et C₄ étant représentées à titre d'exemple en figure 2. Les cellules C₁ à C_{M} sont reliées entre elles et aux bornes B+ et B- par des interrupteurs. Dans le présent mode de réalisation, pour chaque cellule Cₖ, k étant un nombre entier variant de 1 à M, le module Eᵢ comprend un premier interrupteur SW_{1,k} en série avec la cellule Cₖ et un deuxième interrupteur SW_{2,k} en parallèle de l'ensemble comprenant la cellule Cₖ et l'interrupteur SW_{1,k}. Les M ensembles comprenant la cellule Cₖ et le premier interrupteur SW_{1,k} sont disposés en série entre un noeud A et un noeud B. La commande des interrupteurs SW_{1,k} et SW_{2,k}, k variant de 1 à M, permet de mettre en série entre les noeuds A et B, 1 à M cellules parmi les M cellules C₁ à C_{M}. Dans le présent mode de réalisation, le module Eᵢ comprend en outre un pont inverseur, également appelé pont en H, entre les noeuds A et B et les bornes B+ et B- qui permet d'appliquer la tension présente entre les noeuds A et B entre les bornes B+ et B- dans les deux sens. Selon un mode de réalisation, le pont inverseur comprend un interrupteur SW₃ reliant le noeud A à la borne B+, un interrupteur SW₄ reliant le noeud A à la borne B-, un interrupteur SW₅ reliant le noeud B à la borne B+ et un interrupteur SW₆ reliant le noeud B à la borne B-. A titre d'exemple chaque interrupteur SW_{1,k} et SW_{2,k}, k variant de 1 à M, SW₃, SW₄, SW₅ et SW₆ peut correspondre à transistor à effet de champ à grille isolée, également appelé transistor MOS, notamment un transistor MOS de puissance, par exemple un transistor MOS à canal N.

Chaque module Eᵢ comprend, en outre, le circuit de commande esclave 10 (µC) adapté à échanger des données émises par le circuit de commande maître BMS sur le bus de transmission de données BUS. Le circuit de commande esclave 10 peut correspondre à un circuit dédié ou peut comprendre un processeur, par exemple un microprocesseur ou un microcontrôleur, adapté à exécuter des instructions d'un programme d'ordinateur stocké dans une mémoire.

Chaque module Eᵢ comprend, en outre, un circuit de pilotage 12 (Inverter bridge driver) relié aux interrupteurs SW₃, SW₄, SW₅ et SW₆ du pont inverseur et un circuit de pilotage 14 (Transistors driver) relié aux interrupteurs SW_{1,k} et SW_{2,k}, k variant de 1 à M. Chaque circuit de pilotage 12, 14 est adapté à convertir les signaux de commande fournis par le circuit de commande esclave 10 en signaux adaptés à la commande des interrupteurs.

Chaque module Eᵢ comprend, en outre, des capteurs 16 (U, I, T° sensor) reliés au circuit de commande esclave 10. Le module Eᵢ peut comprendre, pour chaque cellule Cₖ, un capteur de température adapté à mesurer la température de la cellule Cₖ. Le module Eᵢ peut en outre comprendre, pour chaque cellule Cₖ, un capteur de tension adapté à mesurer la tension aux bornes de la cellule Cₖ. Le module Eᵢ peut en outre comprendre un capteur de courant adapté à mesurer le courant circulant au noeud A ou au noeud B. Le circuit de commande esclave 10 de chaque module Eᵢ est adapté à transmettre des troisièmes données au circuit de commande maître BMS sur le bus de transmission de données BUS représentatives des mesures réalisées par les capteurs 16 du module Eᵢ. Le nombre et le type de capteurs dépend notamment de l'agencement des cellules du module Eᵢ. Dans l'agencement de cellules représenté en figure 2, un seul capteur du courant circulant au noeud A ou au noeud B peut être prévu.

Dans le mode de réalisation de module Eᵢ de batterie illustré en figure 2, un ordre de connexion de la cellule Cₖ du module Eᵢ signifie que la cellule Cₖ doit être connectée en série entre les noeuds A et B du module Eᵢ, ce qui est obtenu en fermant l'interrupteur SW_{1,k} et en ouvrant l'interrupteur SW_{2,k}, et un ordre de déconnexion de la cellule Cₖ du module Eᵢ signifie que la cellule Cₖ ne doit pas être connectée en série entre les noeuds A et B du module Eᵢ, ce qui est obtenu en ouvrant l'interrupteur SW_{1,k} et en fermant l'interrupteur SW_{2,k}. Toutefois, pour un agencement différent des cellules Cₖ du module Eᵢ dans lequel les cellules Cₖ peuvent être agencées en série et/ou en parallèle entre elles entre les noeuds A et B, un ordre de connexion d'une cellule Cₖ précise en outre dans quelle configuration, série ou parallèle, la cellule Cₖ se trouve par rapport aux autres cellules du module Eᵢ.

Selon un autre mode de réalisation, le circuit de commande maître BMS utilise deux tables de priorités, une première table de priorités qui est utilisée lors d'une opération de charge, appelée table de priorités de charge, et une deuxième table de priorités qui est utilisée lors d'une opération de décharge, appelée table de priorités de décharge. Chaque table de priorités peut être stockée dans la mémoire MEM du circuit de commande maître BMS par exemple sous la forme d'un tableau, chaque ligne du tableau correspondant par exemple à une ligne de la mémoire MEM. A titre d'exemple, pour une batterie comprenant N cellules, on attribue à chaque cellule un identifiant, par exemple un numéro qui varie de 1 à N. Les identifiants peuvent être les mêmes pour les deux tables de priorités. Pour une batterie 5 comprenant N cellules, chaque table de priorités comprend N lignes, chaque ligne j, j étant un nombre entier variant de 1 à N, étant associée à la cellule de numéro j. Il est notamment stocké dans chaque table de priorités pour chaque cellule le niveau de priorité de la cellule. A titre d'exemple, pour une batterie comprenant N cellules, les niveaux de priorité des cellules vont de 1 à N, le niveau de priorité "1" étant le plus important et le niveau de priorité "N" étant le moins important. Le circuit de commande maître BMS peut changer les niveaux de priorité des cellules de chaque table de priorités, notamment à partir des données transmises par les modules Eᵢ, i variant de 1 à N, issues des mesures des capteurs des modules Eᵢ. On appelle mise à jour de la table de priorités une modification des niveaux de priorité d'au moins certaines cellules par le circuit de commande maître BMS dans la table de priorités.

Un tel mode de réalisation permet de façon avantageuse de faire évoluer différemment les niveaux de priorité entre les opérations de charge et les opérations de décharge. En particulier, cela permet que les niveaux de priorités lors d'une opération de charge ne soient pas nécessairement les symétriques des niveaux de priorité lors d'une opération de décharge, c'est-à-dire que l'ordre des niveaux de priorité des cellules, du plus prioritaire au moins prioritaire, pour une opération de décharge de la batterie 5 ne soit pas nécessairement l'inverse de l'ordre des niveaux de priorité des cellules, du plus prioritaire au moins prioritaire, pour une opération de charge.

Pour la détermination des niveaux de priorité des cellules de la batterie, il peut être pris en compte des critères tels que l'état de charge, la température de la cellule, l'état de santé de la cellule ou l'impédance interne de la cellule.

Pour chaque table de priorités, le circuit de commande maître BMS associe, à chaque cellule ayant un niveau de priorité donné, un pointeur, appelé pointeur de priorité suivant par la suite, qui désigne la cellule de la table de priorités qui a le niveau de priorité juste inférieur au niveau de priorité donné et un pointeur, appelé pointeur de priorité précédent par la suite, qui désigne la cellule dans la table de priorités qui a le niveau de priorité juste supérieur au niveau de priorité donné.

Le pointeur de priorité précédent associé à la cellule ayant le niveau de priorité le plus élevé dans la table de priorités ne désigne pas d'autre cellule et peut comprendre une valeur de référence appelée Null. Le pointeur de priorité suivant associé à la cellule ayant le niveau de priorité le plus faible dans la table de priorités ne désigne pas d'autre cellule et peut comprendre une valeur de référence appelée Null.

Pour chaque table de priorités, une opération de mise à jour comprend la détermination de nouveaux niveaux de priorité dans la table de priorités pour les cellules. Le circuit de commande maître BMS associe, en outre, à chaque cellule, un pointeur, appelé futur pointeur de priorité précédent par la suite, qui désigne la cellule dans la table de priorités qui a le niveau de priorité juste supérieur au nouveau niveau de priorité de la cellule dans la mise à jour de la table de priorités et un pointeur, appelé futur pointeur de priorité suivant par la suite, qui désigne la cellule dans la table de priorités qui a le niveau de priorité juste inférieur au nouveau niveau de priorité de la cellule dans la mise à jour de la table de priorités. Selon un mode de réalisation, les pointeurs de priorité suivant et précédent et les futurs pointeurs de priorité suivant et précédent peuvent être stockés dans la table de priorités.

Selon un mode de réalisation, le circuit de commande maître BMS peut transmettre des premières commandes correspondant à des ordres de connexion/déconnexion des cellules aux circuits de commande esclaves pour suivre la consigne C et peut en outre transmettre des deuxièmes commandes correspondant à des ordres de connexion/déconnexion des cellules aux circuits de commande esclaves pour tenir compte d'une une mise à jour de la table de priorités.

Selon un mode de réalisation, le circuit de commande maître BMS utilise des listes chaînées pour déterminer les ordres de connexion/déconnexion des cellules à réaliser. Une liste chaînée désigne en informatique une structure de données représentant une collection ordonnée et de taille arbitraire d'éléments de même type, dont la représentation en mémoire de l'ordinateur est une succession d'éléments faits d'un contenu et d'au moins un pointeur vers un autre élément. De façon imagée, l'ensemble des éléments ressemble à une chaîne dont les maillons seraient les éléments. Toutes les données relatives à chaque liste chaînée peuvent être stockées dans la mémoire MEM du circuit de commande maître BMS. Selon un mode de réalisation, le circuit de commande maître BMS utilise des premières listes chaînées pour une opération de charge qui sont associées à la table de priorités de charge et des deuxièmes listes chaînées pour une opération de décharge qui sont associées à la table de priorités de décharge.

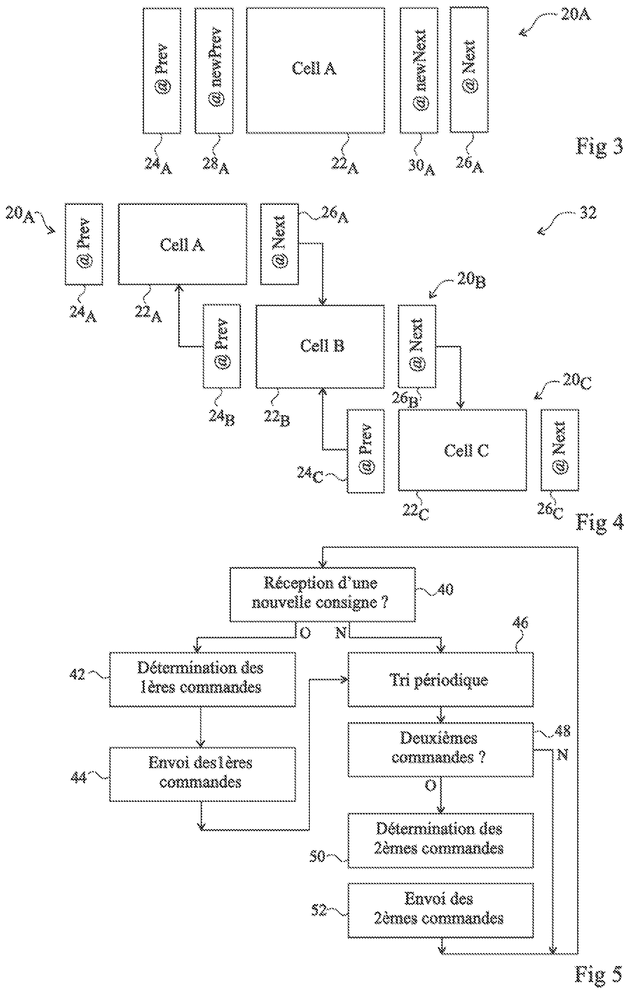

La figure 3 représente de façon schématique un élément 20_{A} de la liste chaînée. Dans la suite de la description des listes chaînées, lorsqu'il est fait référence à une table de priorités sans préciser s'il s'agit de la table de priorités de charge ou de la table de priorités de décharge, cela signifie qu'il s'agit de la table de priorités de charge lorsque la liste chaînée est associée à une opération de charge ou de la table de priorités de décharge lorsque la liste chaînée est associée à une opération de décharge.

Chaque élément 20_{A} comprend :
un identifiant 22_{A} (Cell A) de l'une des cellules de la batterie 5, par exemple le même que celui utilisé dans la table de priorités ;
un pointeur 24_{A} (@ Prev) qui désigne un élément de la liste chaînée correspondant à une cellule ayant un niveau de priorité plus élevée que celle correspondant à l'élément 20_{A} dans la version de la table de priorités avant mise à jour, et qui est appelé pointeur précédent 24_{A} dans la suite de la description ; et
un pointeur 26_{A} (@ Next) qui désigne un élément de la liste chaînée correspondant à une cellule ayant un niveau de priorité moins élevée que celle correspondant à l'élément 20_{A} dans la version de la table de priorités avant mise à jour, et qui est appelé pointeur suivant 26_{A} dans la suite de la description.

Dans la suite de la description, on parle indifféremment d'une cellule ou de l'élément associé d'une liste chaînée.

Selon un mode de réalisation, chaque liste chaînée comprend seulement une partie des cellules de la batterie 5. Deux éléments de deux listes chaînées différentes associés à la même cellule de la batterie ont le même identifiant 22_{A}. Par contre, les valeurs du pointeur précédent 24_{A} et du pointeur suivant 26_{A} de deux éléments de deux listes chaînées différentes associés à la même cellule de la batterie peuvent être différents. De même, le pointeur précédent 24_{A} d'une cellule d'une liste chaînée peut être différent du pointeur de priorité précédent utilisé pour cette cellule dans la table de priorités et le pointeur suivant 26_{A} d'une cellule d'une liste chaînée peut être différent du pointeur de priorité suivant utilisé pour cette cellule dans la table de priorités.

La figure 4 représente, de façon partielle et schématique, un exemple d'une liste chaînée 32 pouvant être utilisée par le circuit de commande maître BMS comprenant, à titre d'exemple, trois éléments 20_{A}, 20_{B} et 20_{C}. Le pointeur suivant 26_{A} de l'élément 20_{A} désigne l'élément 26_{B} de la liste chaînée et le pointeur précédent 24_{B} de l'élément 26_{B} désigne l'élément 20_{A} de la liste chaînée. Le pointeur suivant 26_{B} de l'élément 20_{B} désigne l'élément 26_{C} de la liste chaînée et le pointeur précédent 24_{C} de l'élément 26_{C} désigne l'élément 20_{B} de la liste chaînée. Cela signifie que, dans la version avant mise à jour de la table de priorités, le niveau de priorité de l'élément 20_{A} est plus important que le niveau de priorité de l'élément 20_{B} et que le niveau de priorité de l'élément 20_{B} est plus important que le niveau de priorité de l'élément 20_{C}.

La liste chaînée comprend deux éléments particuliers, les éléments 20_{A} et 20_{C} situés aux extrémités de la liste chaînée. Le pointeur précédent 26_{A} de l'élément 20_{A} de la liste chaînée ne désigne pas un élément de la liste chaînée et comprend une valeur de référence appelée Null. Le pointeur suivant 26_{C} de l'élément 20_{C} de la liste chaînée ne désigne pas un élément de la liste chaînée et comprend la valeur de référence Null.

Les éléments d'une liste chaînée sont agencés de façon ordonnée depuis le premier élément de la liste chaînée jusqu'au dernier élément de la liste chaînée. Dans l'exemple représenté en figure 4, le premier élément de la liste chaînée 32 peut correspondre à l'élément 20A ou à l'élément 20B selon la façon dont les éléments sont agencés dans la liste chaînée. Le rang d'un élément dans la liste chaîné correspond à la position de cet élément compté depuis le premier élément 20_{A} de la liste chaînée.

Le retrait d'un élément d'une liste chaînée va être illustré avec la liste chaînée 32 de la figure 4. A titre d'exemple, le retrait de l'élément 20_{B} est obtenu en modifiant le pointeur suivant 26_{A} de l'élément 20_{A} pour qu'il désigne l'élément 20_{C} et en modifiant le pointeur précédent 24_{C} de l'élément 20_{C} pour qu'il désigne l'élément 20_{A}. Le retrait de l'élément 20_{A} est obtenu en modifiant le pointeur précédent 24_{B} de l'élément 20_{B} pour qu'il désigne la valeur de référence Null. Le retrait de l'élément 20_{C} est obtenu en modifiant le pointeur suivant 26_{B} de l'élément 20_{B} pour qu'il désigne la valeur de référence Null.

L'ajout d'un nouvel élément au sein d'une liste chaînée est obtenu en modifiant les pointeurs adaptés des éléments entre lesquels le nouvel élément est inséré pour qu'ils désignent le nouvel élément et en modifiant les pointeurs suivant et précédent du nouvel élément pour qu'ils désignent les éléments entre lesquels le nouvel élément est inséré. A titre d'exemple, l'ajout d'un nouvel élément, non représenté, entre les éléments 20_{A} et 20_{B} de la liste chaînée 32 est obtenu en modifiant le pointeur suivant 26_{A} de l'élément 20_{A} pour qu'il désigne l'élément, en modifiant le pointeur précédent 24_{B} de l'élément 20_{B} pour qu'il désigne le nouvel élément, en modifiant le pointeur précédent du nouvel élément pour qu'il désigne l'élément 20_{A} et en modifiant le pointeur suivant du nouvel élément pour qu'il désigne l'élément 20_{B}.

L'ajout d'un nouvel élément à une extrémité d'une liste chaînée va être illustré par l'ajout d'un nouvel élément à l'extrémité de la liste chaînée 32 correspondant à l'élément 20_{A}. Cet ajout est obtenu en modifiant le pointeur précédent de l'élément 20_{A} qui était initialement à l'extrémité de la liste chaînée 32 pour qu'il désigne le nouvel élément, en modifiant le pointeur suivant du nouvel élément pour qu'il désigne l'élément 20_{A} qui était initialement à l'extrémité de la liste chaînée 32 et en modifiant le pointeur suivant du nouvel élément pour qu'il désigne la valeur de référence Null.

Le circuit de commande maître BMS peut utiliser plusieurs listes chaînées. Selon un mode de réalisation, le circuit de commande maître BMS utilise une liste chaînée dont les éléments correspondent aux cellules de la batterie 5 utilisables qui sont connectées ou déconnectées lors d'une opération de charge. Une telle liste chaînée est appelée liste de cellules valides de charge par la suite. Les éléments de la liste de cellules valides de charge peuvent être agencés avec le premier élément correspondant à la cellule ayant le niveau de priorité le plus important dans la version avant mise à jour de la table de priorités de charge. Les cellules connectées sont alors toutes situées dans la première partie de la liste de cellules valides de charge depuis la première position de la liste de cellules valides de charge et les cellules déconnectées sont toutes situées dans la deuxième partie de la liste de cellules valides de charge jusqu'à la dernière position de la liste de cellules valides de charge. Le circuit de commande maître BMS peut utiliser un pointeur de position qui est maintenu à jour pour marquer la position dans la liste chaînée du dernier élément connecté de niveau de priorité le plus faible. A titre de variante, ce pointeur peut désigner le premier élément déconnecté ayant le niveau de priorité le plus élevé. De façon analogue, le circuit de commande maître BMS peut utiliser une liste chaînée dont les éléments correspondent aux cellules de la batterie 5 utilisables qui sont connectées ou déconnectées lors d'une opération de décharge. Une telle liste chaînée est appelée liste de cellules valides de décharge par la suite.

Selon un autre mode de réalisation, au lieu de la liste de cellules valides de charge, le circuit de commande maître BMS utilise deux listes chaînées, une liste chaînée dont les éléments correspondent aux cellules de la batterie 5 qui sont connectées lors d'une opération de charge, et appelée liste de cellules connectées de charge par la suite, et une liste chaînée dont les éléments correspondent aux cellules de la batterie 5 qui ne sont pas connectées lors d'une opération de charge mais qui sont susceptibles d'être connectées, et appelée liste de cellules déconnectées de charge par la suite. Les éléments de la liste de cellules déconnectées de charge peuvent être agencés avec le premier élément correspondant à la cellule ayant le niveau de priorité le plus important dans la version avant mise à jour de la table de priorités de charge parmi les cellules déconnectées. Les éléments de la liste de cellules connectées de charge peuvent être agencés avec le premier élément correspondant à la cellule ayant le niveau de priorité le moins important dans la version avant mise à jour de la table de priorités de charge parmi les cellules connectées. De façon analogue, le circuit de commande maître BMS peut utiliser, au lieu de la liste de cellules valides de décharge, une liste de cellules connectées pour une opération de décharge et une liste de cellules déconnectées pour une opération de décharge.

Selon un mode de réalisation, le circuit de commande maître BMS utilise en outre au moins une liste chaînée dont les éléments correspondent à des cellules de la batterie 5 qui ne sont pas connectées et qui ne peuvent pas être sélectionnées. De tels éléments et les cellules correspondantes sont dits en quarantaine par la suite et cette liste chaînée est appelée liste de quarantaine par la suite. Le circuit de commande maître BMS est adapté à déterminer qu'une cellule de la batterie doit être mise en quarantaine et l'élément correspondant doit être déplacé dans la liste de quarantaine notamment à partir des signaux fournis par les capteurs des modules Eᵢ, i variant de 1 à N.

Plusieurs listes de quarantaine peuvent être utilisées. Selon les critères utilisés pour le déplacement d'une cellule dans une liste de quarantaine, la liste de quarantaine peut être commune aux opérations de charge et de décharge, être associée seulement aux opérations de charge ou être associée seulement aux opérations de décharge.

Une liste chaînée peut comprendre des éléments mis en quarantaine de façon temporaire. Une telle liste chaînée est appelée liste de quarantaine temporaire par la suite. Une autre liste chaînée peut comprendre des éléments mis en quarantaine de façon définitive et dont les cellules correspondantes doivent être remplacées. Une telle liste chaînée est appelée liste de quarantaine définitive par la suite. Dans les listes de quarantaine décrites précédemment, les éléments peuvent être agencés avec le premier élément correspondant à la cellule ayant le niveau de priorité le plus important dans la version avant mise à jour de la table de priorités parmi les cellules de la liste chaînée. A titre de variante, les éléments peuvent être agencés dans la liste de quarantaine par ordre d'arrivée dans la liste chaînée.

Selon un autre mode de réalisation, au lieu d'une liste de cellules en quarantaine temporaire pour une opération de charge et une liste de cellules en quarantaine temporaire pour une opération de décharge, le circuit de commande maître BMS peut utiliser plus de deux listes chaînées d'éléments mis en quarantaine temporaire selon les conditions qui ont conduit à écarter les cellules correspondantes. Une liste chaînée peut comprendre des éléments mis en quarantaine de façon temporaire lorsqu'au moins l'un des paramètres de fonctionnement des cellules correspondantes, par exemple la température de la cellule, le taux de charge de la cellule, la tension aux bornes de la cellule, etc., est en dehors d'une plage de fonctionnement normale. Une telle liste chaînée est appelée liste de quarantaine temporaire pour cause de tension/température par la suite. Le circuit de commande maître BMS peut utiliser une liste de quarantaine temporaire pour cause de tension/température pour les opérations de charge et une liste de quarantaine temporaire pour cause de tension/température pour les opérations de décharge.

Selon un mode de réalisation, le nombre d'opérations de connexion/déconnexion que peut réaliser le circuit de commande esclave 12 d'un module Eᵢ, i variant de 1 à N, par unité de temps peut être limité de par la structure des circuits d'alimentation des composants internes du module Eᵢ. Une autre liste chaînée peut comprendre des éléments mis en quarantaine de façon temporaire parce que les modules contenant les cellules correspondantes ont dépassé le seuil autorisé d'opérations de connexion/déconnexion par unité de temps. Une telle liste chaînée est appelée liste de quarantaine temporaire pour cause d'alimentation par la suite. Pour la liste de quarantaine pour cause d'alimentation et la liste de quarantaine définitive, il peut ne pas être utile de prévoir des listes chaînées différentes pour les opérations de charge et de décharge dans la mesure où les critères qui entraînent le déplacement d'un élément dans l'une de ces listes peuvent être les mêmes pour une opération de charge ou de décharge.

Selon un mode de réalisation, pour une opération de charge ou de décharge, à chaque cellule de la batterie correspond un seul élément dans l'une des listes de sélection utilisées pour cette opération de charge ou de décharge. On parle alors indifféremment de la cellule ou de l'élément correspondant dans la suite de la description. Selon un mode de réalisation, dans le cas où le circuit de commande maître BMS utilise une liste de cellules connectées pour une opération de charge, une liste de cellules connectées pour une opération de décharge, une liste de cellules déconnectées pour une opération de charge, une liste de cellules déconnectées pour une opération de décharge, une liste de quarantaine temporaire pour cause de tension/température pour une opération de charge et une liste de quarantaine temporaire pour cause de tension/température pour une opération de décharge et au moins une autre liste de quarantaine commune pour les opérations de charge et de décharge, chaque cellule est dans l'une des listes chaînées suivantes :
la liste de cellules connectées pour une opération de charge, la liste de cellules déconnectées pour une opération de charge, la liste de quarantaine temporaire pour cause de tension/température pour une opération de charge ou une autre liste de quarantaine commune aux opérations de charge et de décharge ;
et dans l'une des listes suivantes :
   liste de cellules connectées pour une opération de décharge, liste de cellules déconnectées pour une opération de décharge, liste de quarantaine temporaire pour cause de tension/température pour une opération de décharge ou autre liste de quarantaine commune aux opérations de charge et de décharge.

Toutefois, de façon avantageuse, certaines combinaisons peuvent être exclues. A titre d'exemple, il peut être prévu qu'une cellule ne puisse pas être à la fois dans la liste de cellules connectées pour une opération de charge et dans la liste de quarantaine temporaire pour cause de tension/température pour une opération de décharge. En effet, sans cette exclusion, lors du passage d'une opération de charge à une opération de décharge, l'élément de la liste de cellules connectées de charge, qui correspond donc à un accumulateur qui est connecté électriquement, se trouve dans la liste de quarantaine temporaire pour cause de tension/température pour une opération de décharge, tout en correspondant toujours à un accumulateur qui est connecté électriquement. Il serait alors nécessaire à la transition d'une opération de charge vers une opération de décharge (ou d'une opération de décharge vers une opération de charge) d'appliquer un traitement supplémentaire à la liste de quarantaine temporaire pour cause de tension/température pour une opération de décharge (ou de charge) pour déconnecter les accumulateurs toujours connectés électriquement, ce qui implique un temps de traitement supplémentaire. Le fait de prévoir des exclusions permet donc de faciliter les transitions entre les opérations de charge et de décharge.

Dans la suite de la description, les listes chaînées décrites précédemment et utilisées par le circuit de commande maître BMS pour la détermination des premières et deuxièmes commandes sont appelées listes de sélection.

Le circuit de commande maître BMS associe à chaque cellule de la batterie le pointeur précédent de cet élément dans la liste de sélection à laquelle appartient l'élément, le pointeur suivant de cet élément dans la liste de sélection à laquelle appartient l'élément, et une donnée d'appartenance permettant de déterminer directement ou indirectement à quelle liste de sélection appartient la cellule. Lorsque la cellule appartient à deux listes de sélection, l'une associée à une opération de charge et l'autre associée à une opération de décharge, le pointeur précédent, le pointeur suivant et la donnée d'appartenance indiqués à la phrase précédente, sont associées à la cellule à la fois pour la liste de sélection associée à une opération de charge et la liste de sélection associée à une opération de décharge. Un avantage du mode de réalisation décrit précédemment est que la gestion des listes chaînées peut mettre en oeuvre une allocation statique de mémoire puisqu'un nombre maximal connu de données est stocké pour chaque accumulateur de la batterie.

Dans la suite de la description, sauf indication contraire, on considère, pour plus de simplicité, qu'un élément appartient à une seule liste de sélection. Toutefois, dans le cas où l'élément appartient à deux listes de sélection, l'une associée à une opération de charge et l'autre associée à une opération de décharge, les étapes décrites ci-après sont à réaliser pour chaque liste de sélection. Pour la table de priorités de charge et la table de priorités de décharge, la mise à jour de la table de priorités comprend notamment la détermination par le circuit de commande maître BMS, pour chaque cellule, d'une nouvelle valeur du niveau de priorité de la cellule dans la table de priorités. La mise à jour de la table de priorités comprend, en outre, la détermination des nouvelles valeurs pour les futurs pointeurs précédents et suivants pour tenir compte des changements de niveaux de priorité. Pour effectuer une mise à jour de la table de priorités, le circuit de commande maître BMS peut utiliser une copie de la table de priorités, appelée table de priorités temporaire, sur laquelle sont appliqués des algorithmes pour déterminer les nouvelles valeurs des niveaux de priorités et des futurs pointeurs. Lorsque toutes les nouvelles valeurs de la table de priorités temporaire sont déterminées, le circuit de commande maître BMS arrête l'utilisation de la table de priorités et utilise la table de priorités temporaire. La table de priorités temporaire devient alors la table de priorités mise à jour et la table de priorités utilisée jusqu'alors par le circuit de commande maître BMS pour la détermination des premières et deuxièmes commandes peut être utilisée comme prochaine table de priorité temporaire. La mise à jour de la table de priorités peut être réalisée en tache de fond par le circuit de commande maître BMS, lorsque les ressources du circuit de commande maître BMS ne sont pas utilisées pour mettre en oeuvre le procédé de commande des cellules qui va être décrit. Selon un mode de réalisation, lorsque le circuit de commande maître BMS met à jour la table de priorités de charge, il met également à jour la table de priorités de décharge et inversement.

Selon un mode de réalisation, en plus des listes de sélection, le circuit de commande maître BMS utilise au moins une liste chaînée supplémentaire contenant les éléments qui sont susceptibles de ne pas être correctement placés dans les listes de sélection. Cette liste chaînée est appelée liste de tri par la suite. Un élément présent dans la liste de tri est donc toujours présent dans au moins l'une des listes de sélection.

Des éléments peuvent ne pas être placés correctement dans les listes de sélection pour plusieurs raisons :
- des éléments peuvent ne pas être placés correctement dans les listes de sélection associées à une opération de charge suite à un changement des niveaux de priorité résultant d'une mise à jour de la table de priorités de charge ;
- des éléments peuvent ne pas être placés correctement dans les listes de sélection associées à une opération de décharge suite à un changement des niveaux de priorité résultant d'une mise à jour de la table de priorités de décharge ;
- des éléments peuvent ne pas être placés correctement dans les listes de sélection associées à une opération de charge suite à un changement des niveaux de priorité résultant d'une mise à jour de la table de priorités de décharge alors que la batterie est en décharge et qui entraînerait des incohérences lors du passage de l'opération de décharge à une opération de charge ; et
- des éléments peuvent ne pas être placés correctement dans les listes de sélection associées à une opération de décharge suite à un changement des niveaux de priorité résultant d'une mise à jour de la table de priorités de charge alors que la batterie est en charge et qui entraînerait des incohérences lors du passage de l'opération de charge à une opération de décharge.

Selon un mode de réalisation, le circuit de commande maître BMS peut utiliser une seule liste de tri comprenant tous les éléments susceptibles de ne pas être correctement placés pour une opération de charge et de décharge. Selon un mode de réalisation, lors de la mise à jour de la table de priorités de charge ou de décharge, tous les éléments de la table de priorités peuvent être placés par défaut dans la liste de tri. Ceci permet d'être sûr de traiter les incohérences de placement vis-à-vis des nouveaux jeux de priorités et vis-à-vis des passages entre les opérations de charge et de décharge.

Selon un autre mode de réalisation, le circuit de commande maître BMS peut utiliser une liste de tri pour une opération de charge, appelée liste de tri de charge, et une liste de tri pour une opération de décharge, appelée liste de tri en décharge. A titre de variante, le circuit de commande maître BMS peut utiliser une liste de tri, appelée liste de tri commune, qui comprend les éléments qui sont à trier de la même façon lors d'une mise à jour de la table de priorités de charge et de la table de priorités de décharge ou lors d'un basculement d'une liste de sélection de charge à une liste de sélection de décharge ou inversement lors d'un changement d'un passage de la batterie entre charge et décharge, une liste de tri, appelée liste de tri spécifique de charge, qui comprend les éléments qui sont à trier lors d'une mise à jour d'au moins l'une des tables de priorité ou à retrier après une alternance avec le mode de fonctionnement en décharge, et une liste de tri, appelée liste de tri spécifique de décharge, qui comprend les éléments qui sont à trier lors d'une mise à jour d'au moins l'une des tables de priorité ou à retrier après une alternance avec le mode de fonctionnement en charge.

Le circuit de commande maître BMS peut mettre à jour la liste de tri ou les listes de tri à chaque mise à jour de la table de priorités de charge ou de décharge.

Comme cela est décrit par la suite, il est mis en oeuvre une opération de triage pour placer correctement les éléments qui figurent dans la liste de tri ou les listes de tri. Lorsqu'un élément est trié, cet élément peut être retiré de la liste de tri si les niveaux de priorité ne sont pas modifiés et s'il n'y a pas eu d'alternance entre une opération de charge et une opération de décharge. On obtient ainsi une convergence vers un état stable où tous les éléments sont triés tant que les niveaux de priorité et le mode de fonctionnement (en charge ou en décharge) ne changent pas.

La figure 5 est un schéma par blocs illustrant un procédé de commande de connexion/déconnexion des cellules pouvant être mis en oeuvre par la batterie 5 représentée en figure 1.

A l'étape 40, le circuit de commande maître BMS détermine si une nouvelle consigne C a été reçue. Si une nouvelle consigne C a été reçue, le procédé se poursuit à l'étape 42.

A l'étape 42, le circuit de commande BMS détermine des premières commandes pour suivre la nouvelle consigne C.

Selon un mode de réalisation dans lequel la liste de cellules valides de charge ou de décharge décrite précédemment est utilisée, le circuit de commande maître BMS peut utiliser le pointeur de position décrit précédemment qui désigne le dernier élément connecté. Lorsque la nouvelle consigne C entraîne la connexion d'une cellule supplémentaire de la batterie 5, le circuit de commande maître BMS sélectionne l'élément de la liste de cellules valides de charge ou de décharge qui suit le dernier élément connecté et détermine des premières commandes pour connecter la cellule correspondant à cet élément qui devient alors le dernier élément connecté. Cette opération est répétée autant de fois qu'il y a de cellules à connecter pour suivre la nouvelle consigne C. Lorsque la nouvelle consigne C entraîne la déconnexion d'une cellule de la batterie 5, le circuit de commande maître BMS sélectionne le dernier élément connecté et détermine des premières commandes pour déconnecter la cellule correspondant à cet élément, l'élément précédent de la liste de cellules valides devenant le dernier élément connecté. Cette opération est répétée autant de fois qu'il y a de cellules à déconnecter pour suivre la nouvelle consigne C.

Selon un mode de réalisation dans lequel les listes de cellules connectées et déconnectées de charge et de décharge décrites précédemment sont utilisées, lorsque la nouvelle consigne C entraîne la connexion d'une cellule supplémentaire de la batterie 5, le circuit de commande maître BMS sélectionne le premier élément de la liste de cellules déconnectées de charge ou de décharge et détermine des premières commandes pour connecter la cellule de la batterie 5 correspondant à cet élément. Cette opération est répétée autant de fois qu'il y a de cellules à connecter pour suivre la nouvelle consigne C. Selon un mode de réalisation, lorsque la nouvelle consigne C entraîne la déconnexion d'une cellule supplémentaire de la batterie 5, le circuit de commande maître BMS sélectionne le premier élément de la liste connectée de charge ou de décharge et détermine des premières commandes pour déconnecter la cellule de la batterie 5 correspondant à cet élément. Cette opération est répétée autant de fois qu'il y a de cellules à déconnecter pour suivre la nouvelle consigne C.

Dans les modes de réalisation décrits précédemment, l'opération de sélection peut être avantageusement réalisée de façon robuste puisqu'il est garanti que le premier élément de la liste déconnectée ou connectée de charge ou de décharge est toujours disponible pour être sélectionné ou que l'élément désigné par un pointeur ou l'élément suivant l'élément désigné par un pointeur est toujours disponible pour être sélectionné. En outre, l'opération de sélection peut être réalisée dans une durée bornée puisqu'il n'y a pas d'étape de recherche d'éléments à connecter ou déconnecter, les éléments sélectionnés étant déterminés de façon automatique.

Selon un mode de réalisation, à l'étape de sélection, une opération de tri des listes de sélection n'est pas réalisée. Dans ce cas, lorsque la liste de cellules valides de charge (ou de décharge) décrite précédemment est utilisée, lorsque le circuit de commande maître BMS sélectionne le dernier élément connecté de la liste de cellules valides de charge (ou de décharge) pour déconnecter la cellule correspondante, il modifie seulement le pointeur de position qui désigne le dernier élément connecté. De même, lorsque le circuit de commande maître BMS sélectionne l'élément suivant le dernier élément connecté de la liste de cellules valides de charge (ou de décharge) pour connecter la cellule correspondante, il modifie seulement le pointeur de position qui désigne dorénavant cet élément. Lorsque les listes de cellules connectées et déconnectées de charge (ou de décharge) décrites précédemment sont utilisées, lorsque le circuit de commande maître BMS sélectionne le premier élément de la liste déconnectée de charge ou de décharge, il le place en première position de la liste connectée de charge (ou de décharge) et modifie les pointeurs des éléments concernés en conséquence et lorsque le circuit de commande maître BMS sélectionne le premier élément de la liste connectée de charge (ou de décharge), il le place en première position de la liste déconnectée de charge (ou de décharge) et modifie les pointeurs des éléments concernés en conséquence.

Selon un mode de réalisation, lorsque la batterie est en charge et qu'au moins une cellule utilisable est connectée ou déconnectée, le circuit de commande maître BMS modifie la liste de cellules valides pour une opération de charge (ou la liste de cellules connectées pour une opération de charge et la liste de cellules déconnectées pour une opération de charge) mais également la liste de cellules valides pour une opération de décharge (ou la liste de cellules connectées pour une opération de décharge et la liste de cellules déconnectées pour une opération de décharge) . De même, lorsque la batterie est en décharge et qu'au moins une cellule utilisable est connectée ou déconnectée, le circuit de commande maître modifie la liste de cellules valides pour une opération de décharge (ou la liste de cellules connectées pour une opération de décharge et la liste de cellules déconnectées pour une opération de décharge) mais également la liste de cellules valides pour une opération de charge (ou la liste de cellules connectées pour une opération de charge et la liste de cellules déconnectées pour une opération de charge). Toutefois, lorsque la batterie est en charge et qu'au moins une cellule est mise dans la liste de quarantaine temporaire pour cause de tension/température pour une opération de charge, le circuit de commande maître BMS peut ne pas mettre la cellule dans la liste de quarantaine temporaire pour cause de tension/température pour une opération de décharge. En effet, une cellule peut être mise dans la liste de quarantaine temporaire pour cause de tension/température pour une opération de charge parce que son état de charge dépasse un seuil alors qu'il est souhaitable que cette cellule reste immédiatement disponible lors d'un passage en décharge. De même, lorsque la batterie est en décharge et qu'au moins une cellule est mise dans la liste de quarantaine temporaire pour cause de tension/température pour une opération de décharge, le circuit de commande maître BMS peut ne pas mettre la cellule dans la liste de quarantaine temporaire pour cause de tension/température pour une opération de charge. En effet, une cellule peut être mise dans la liste de quarantaine temporaire pour cause de tension/température pour une opération de décharge parce que son état de charge passe en dessous un seuil alors qu'il est souhaitable que cette cellule reste immédiatement disponible lors d'un passage en charge.

Selon un mode de réalisation, à l'étape de sélection, une opération de tri des éléments sélectionnés des listes de sélection est en outre réalisée notamment pour tenir compte d'une éventuelle mise à jour de la table de priorités. Une contrainte est que l'opération de tri doit être compatible avec le résultat de l'exécution de l'étape de sélection sans opération de tri. Un exemple de contrainte de compatibilité est que si l'exécution de l'étape de sélection sans opération de tri entraîne la déconnexion de la dernière cellule connectée de la liste de cellules valides de charge (ou de décharge), l'opération de tri doit entraîner le déplacement de la dernière cellule connecté dans la partie de la liste de cellules valides de charge (ou de décharge) regroupant les cellules déconnectées. Un autre exemple de contrainte de compatibilité est que si l'exécution de l'étape de sélection sans opération de tri entraîne le retrait de l'élément sélectionné de la liste des cellules connectées de charge (ou de décharge) et l'insertion de l'élément sélectionné en tête de la liste des cellules déconnectées de charge (ou de décharge), l'opération de tri doit entraîner le déplacement de l'élément sélectionné de la liste des cellules connectées de charge (ou de décharge) vers la liste des cellules déconnectées de charge (ou de décharge) à une position autre que la première position. Selon un mode de réalisation, lorsque la batterie est en charge, l'opération de tri à l'étape de sélection est réalisée seulement dans les listes de sélection de charge et lorsque la batterie est en décharge, l'opération de tri à l'étape de sélection est réalisée seulement dans les listes de sélection de décharge. L'opération de tri peut être réalisée selon différents modes de réalisation correspondant à un tri plus ou moins partiel de l'élément sélectionné.

Selon un mode de réalisation, l'opération de tri correspond à un tri partiel de l'élément sélectionné qui consiste à déplacer l'élément sélectionné au plus près de l'élément désigné par le futur pointeur de priorité précédent ou par le futur pointeur de priorité suivant si cela est compatible avec le résultat de l'exécution de l'étape de sélection sans opération de tri. Dans le cas où la liste de cellules connectées et la liste de cellules déconnectées décrites précédemment sont utilisées, la contrainte d'un tel tri partiel est simplement que l'élément désigné par le futur pointeur de priorité précédent ou l'élément désigné par le futur pointeur de priorité suivant se trouve dans la liste de sélection dans laquelle doit être déplacé l'élément sélectionné. Ceci permet de façon avantageuse de borner la durée de l'exécution de l'opération de tri.

Selon un autre mode de réalisation, le circuit de commande maître BMS, pour l'élément sélectionné, compare le futur pointeur de priorité précédent avec le pointeur de priorité précédent et compare le futur pointeur de priorité suivant avec le pointeur de priorité suivant. Cette comparaison est indépendante de la liste de sélection à laquelle appartient l'élément sélectionné. Dans le cas où le futur pointeur de priorité précédent est égal au pointeur de priorité précédent et que le futur pointeur de priorité suivant est égal au pointeur de priorité suivant, cela signifie que le niveau de priorité de l'élément sélectionné n'a pas bougé et qu'il n'y a pas à réaliser d'opération de tri de l'élément sélectionné. Dans le cas où le futur pointeur de priorité précédent est différent du pointeur de priorité précédent et/ou dans le cas où le futur pointeur de priorité suivant est différent du pointeur de priorité suivant, cela signifie qu'un tri de l'élément sélectionné doit être réalisé. Lorsqu'il y a compatibilité avec le résultat de l'exécution de l'étape de sélection sans opération de tri, l'élément sélectionné est déplacé directement à l'emplacement correspondant au futur pointeur de priorité précédent et au futur pointeur de priorité suivant. En cas d'incompatibilité, un tri partiel tel que décrit précédemment peut être mis en oeuvre ou l'étape de sélection peut être exécutée sans opération de tri.

A l'étape 44, les premières commandes sont transmises par le circuit de commande maître BMS aux circuits de commande esclaves des étages E₁ à E_{N} par le bus de transmission de données BUS. Le procédé se poursuit à l'étape 46.

Si, à l'étape 40, une nouvelle consigne C n'a pas été reçue, le procédé se poursuit à l'étape 46. Un tel mode de réalisation peut être adapté dans le cas où les circuits de commande esclaves 10 sont adaptés à maintenir les signaux qu'ils fournissent en l'absence de nouveaux ordres.

A titre de variante, l'étape 40 peut ne pas être présente et les étapes 42 et 44 peuvent être exécutées à chaque cycle. Lorsque la consigne C ne varie pas, les premières commandes peuvent être néanmoins déterminées à l'étape 42 pour suivre la valeur inchangée de la consigne C et ces premières commandes sont transmises à l'étape 44 par le circuit de commande maître BMS aux circuits de commande esclaves des étages E₁ à E_{N} par le bus de transmission de données BUS.

A l'étape 46, le circuit de commande maître BMS effectue une opération de tri de l'un des éléments de la liste de tri. Selon un mode de réalisation, lorsque la batterie est en charge, l'opération de tri est réalisée avec la liste de tri de charge ou la liste de tri commune puis la liste de tri spécifique de charge et lorsque la batterie en décharge, l'opération de tri est réalisée avec la liste de tri de décharge ou la liste de tri commune puis la liste de tri spécifique de décharge. Lorsque la batterie est en charge, on considère les pointeurs et futurs pointeurs de la table de priorités de charge et lorsque la batterie est en décharge, on considère les pointeurs et futurs pointeurs de la table de priorités de décharge. Selon un mode de réalisation, le circuit de commande maître BMS détermine, pour le premier élément de la liste de tri, si le pointeur de priorité précédent est égal au futur pointeur de priorité précédent et si le pointeur de priorité suivant est égal au futur pointeur de priorité suivant. Si tel est le cas, cela signifie que l'élément considéré est bien placé dans la liste de sélection à laquelle il appartient. Le premier élément est alors retiré de la liste de tri et l'élément suivant de la liste de tri est considéré. Si tel n'est pas le cas, cela signifie que l'élément considéré n'est pas bien placé dans la liste de sélection. L'opération de tri de l'élément considéré peut alors être réalisée comme cela a été décrit précédemment à l'étape 42 pour l'élément sélectionné. En particulier, un tri partiel peut être mis en oeuvre. Selon un mode de réalisation, une opération de tri est réalisée de la façon suivante. Lorsque la batterie est en charge, on considère les pointeurs et futurs pointeurs de la table de priorités de charge et lorsque la batterie est en décharge, on considère les pointeurs et futurs pointeurs de la table de priorités de décharge. Lorsque le futur pointeur de priorité précédent et le pointeur de priorité précédent de l'élément sélectionné sont différents, c'est l'élément sélectionné qui est déplacé dans les listes de sélection pour que le pointeur précédent de l'élément sélectionné devienne égal au futur pointeur précédent de l'élément sélectionné. Lorsque le futur pointeur de priorité suivant et le pointeur de priorité suivant de l'élément sélectionné sont différents, c'est l'élément désigné par le futur pointeur de priorité suivant de l'élément sélectionné qui est déplacé dans les listes de sélection pour que le pointeur de priorité précédent de l'élément désigné par le futur pointeur de priorité suivant de l'élément sélectionné désigne l'élément sélectionné. Ceci permet, de façon avantageuse, d'éviter des déplacements répétés indésirable d'un même élément entre deux positions.

Si l'élément considéré ne doit pas être changé de liste de sélection mais seulement être déplacé dans la même liste de sélection, le circuit de commande maître BMS déplace cet élément, par exemple en le retirant de la liste de sélection où il se trouve et en l'insérant dans cette même liste de sélection à la bonne place. Si l'élément considéré doit être changé de liste de sélection, il est retiré de la liste de sélection où il se trouve et est inséré dans une autre liste de sélection à la bonne place.

Lorsque le déplacement d'un élément suite à une opération de tri va entraîner une modification du nombre total de cellules connectées de la batterie 5, il est nécessaire d'effectuer le déplacement d'un autre élément pour que le nombre total de cellules connectées reste constant. La connexion ou la déconnexion de cet autre élément peut être réalisé comme cela a été décrit précédemment à l'étape 42. A titre d'exemple, si un élément est déplacé dans la liste de cellules valides de charge (ou de décharge) décrite précédemment d'une position correspondant à une cellule connectée à une position correspondant à une cellule déconnectée, le circuit de commande maître BMS peut déplacer le pointeur du dernier élément connecté sur l'élément suivant de façon à entraîner la connexion d'une cellule supplémentaire. Selon un autre exemple, si un élément est déplacé de la liste de cellules connectées de charge (ou de décharge) vers la liste de cellules déconnectées de charge (ou de décharge) décrites précédemment, le premier élément de la liste de cellules déconnectées de charge (ou de décharge) peut être déplacé dans la liste de cellules connectées de charge (ou de décharge). Selon un mode de réalisation, une opération de tri de l'élément déplacé est en outre réalisée. Le procédé se poursuit à l'étape 48.

A l'étape 48, le circuit de commande maître BMS détermine si l'étape 46 de tri nécessite la transmission de deuxièmes commandes de connexion/déconnexion aux circuits de commande esclaves des étages E₁ à E_{N}. Si l'étape 46 de tri partiel ne nécessite pas la transmission de deuxièmes commandes de connexion/déconnexion, le procédé se poursuit à l'étape 40 ce qui clôt le cycle. Si l'étape 46 de tri partiel nécessite la transmission de deuxièmes commandes de connexion/déconnexion, le procédé se poursuit à l'étape 50.

A l'étape 50, le circuit de commande BMS détermine des deuxièmes commandes pour suivre l'opération de tri. Le procédé se poursuit à l'étape 52.

A l'étape 52, les deuxièmes données sont transmises par le circuit de commande maître BMS aux circuits de commande esclaves des étages E₁ à E_{N} par le bus de transmission de données BUS. Le procédé se poursuit à l'étape 40 ce qui clôt le cycle.

Dans le mode de réalisation précédent, une seule opération de tri est réalisée par cycle. A titre de variante, les étapes 46 à 50 peuvent être répétées un nombre déterminé de fois par cycle.

Selon un mode de réalisation du procédé de transmission de données sur le bus BUS, une première ou deuxième commande transmise par le circuit de commande maître BMS est adressée au circuit de commande esclave 10 d'un seul module Eᵢ. Le circuit de commande esclave 10 de chaque module Eᵢ est alors adapté à déterminer si la commande qu'il reçoit lui est destiné. Si cela est le cas, le circuit de commande esclave 10 commande les circuits de pilotage 12 et 14 pour appliquer les ordres de connexion/déconnexion demandés par le circuit de commande maître BMS. A titre d'exemple, les commandes sont transmises sous la forme de trames, chaque trame comprenant un entête contenant l'adresse du module Eᵢ désigné suivi d'octets relatifs à la commande des interrupteurs, et éventuellement suivis d'au moins un octet de contrôle. Un avantage d'un tel mode de réalisation est que la réactivité de la batterie 5 à réception d'une nouvelle consigne C est optimale. En outre, les commutations des interrupteurs des modules Eᵢ sont étalées dans le temps de sorte que la génération de perturbations électromagnétiques est réduite. En outre, un contrôle d'erreur de trame efficace peut être mis en oeuvre.

Selon un autre mode de réalisation du procédé de transmission de données, chaque trame transmise par le circuit de commande maître BMS contient l'ensemble des ordres de connexion/déconnexion pour toutes les cellules Cₖ de tous les modules Eᵢ. Le circuit de commande esclave 10 de chaque module Eᵢ est donc sollicité à chaque trame envoyée par le circuit de commande maître BMS. Le circuit de commande esclave 10 de chaque module Eᵢ est adapté à analyser la trame en extraire les ordres de connexion/déconnexion des interrupteurs appartenant au module Eᵢ.

Dans le mode de réalisation décrit précédemment, les premières commandes sont transmises à l'étape 44 et les deuxièmes commandes sont transmises à l'étape 52. A titre de variante, les premières et deuxièmes commandes peuvent être transmises à l'étape 52. Dans ce cas, le circuit de commande maître BMS peut déterminer si un circuit de commande esclave 10 est sollicité par des commandes différentes et peut déterminer une seule commande pour ce circuit de commande esclave 10 intégrant les différentes commandes.

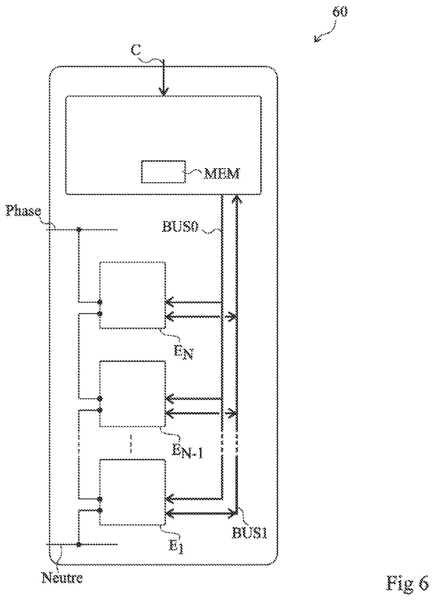

La figure 6 représente un mode de réalisation d'une batterie 60. La batterie 40 comprend l'ensemble des éléments de la batterie 5 représentée en figure 1 à la différence que le bus de transmission de données BUS est remplacé par deux bus de transmission de données BUSO et BUS1 qui relient chacun le circuit de commande maître BMS à chaque module E₁ à E_{N}.

Le bus de transmission de données BUSO est un bus rapide, c'est-à-dire un bus sur lequel des données sont transmises avec un débit supérieur à 3 mégabits par seconde, de préférence compris entre 5 mégabits par seconde et 7 mégabits par seconde. Le bus de transmission de données BUSO peut être un bus unidirectionnel. A titre d'exemple, le bus BUSO est un bus selon la norme RS485.

Le bus BUS1 est un bus lent, c'est-à-dire sur lequel des données sont transmises avec un débit inférieur à 3 mégabits par seconde, de préférence compris entre 0,5 mégabits par seconde et 1 mégabit par seconde. Le bus BUS1 est un bus bidirectionnel. A titre d'exemple, le bus BUS1 est un bus de données CAN, notamment selon la norme ISO 11898, qui de façon avantageuse intègre une gestion de l'arbitrage des communications.

Le bus rapide BUSO est utilisé pour la transmission des premières et deuxièmes commandes fournies par le circuit de commande maître BMS pour suivre la consigne C. Le bus lent BUS1 est utilisé pour l'échange de toutes les autres données entre le circuit de commande maître BMS et chaque module E₁ à E_{N}.

Selon un mode de réalisation, le circuit de commande maître utilise deux tables de sélection pour sélectionner une cellule et des cellules lorsque des opérations de connexion/déconnexion de cellules sont à réaliser, une première table de sélection étant utilisée lors d'une opération de charge de la batterie et est appelée table de sélection de charge par la suite et une deuxième table de sélection étant utilisée lors d'une opération de décharge de la batterie et est appelée table de sélection de décharge par la suite.

Dans la suite de la description, un mode de réalisation va être décrit pour une seule table de sélection sachant que, lors d'une opération de charge de la batterie, c'est la table de sélection de charge qui est utilisée et que, lors d'une opération de décharge de la batterie, c'est la table de sélection de décharge qui est utilisée.

Selon un mode de réalisation, le circuit de commande maître BMS transmet des premières commandes correspondant à des ordres de connexion/déconnexion des cellules aux circuits de commande esclaves pour suivre la consigne et transmet des deuxièmes commandes correspondant à des ordres de connexion/déconnexion des cellules aux circuits de commande esclaves pour suivre une modification de la table de sélection suite au changement du classement de priorités.

Selon un mode de réalisation, la prise en compte des modifications du classement de priorité est réalisée de façon progressive dans la table de sélection. A chaque étape de mise à jour de la table de sélection, seule une partie de la table de sélection est traitée par le circuit de commande maître BMS. De préférence, à chaque étape de mise à jour de la table de sélection, seule une ligne de la table de sélection est traitée par le circuit de commande maître BMS. Selon un mode de réalisation, avant chaque étape de mise à jour de la table de sélection, le circuit de commande vérifie si une nouvelle consigne a été reçue de sorte que la transmission des premières commandes est réalisée de façon prioritaire par rapport à la transmission des deuxièmes commandes.

Un mode de réalisation d'un procédé de connexion/déconnexion des cellules pouvant être mis en oeuvre par la batterie 5 représentée en figure 1 va maintenant être décrit en relation avec la figure 5.

A l'étape 40, le circuit de commande maître BMS détermine si une nouvelle consigne C a été reçue. Si une nouvelle consigne C a été reçue, le procédé se poursuit à l'étape 42.

A l'étape 42, le circuit de commande BMS détermine des premières commandes pour suivre la nouvelle consigne. Le procédé se poursuit à l'étape 44.

A l'étape 44, les premières commandes sont transmises par le circuit de commande maître BMS aux circuits de commande esclaves des étages E₁ à E_{N} par le bus de transmission de données BUS. Le procédé se poursuit à l'étape 46.

Si, à l'étape 40, une nouvelle consigne C n'a pas été reçue, le procédé se poursuit à l'étape 46.

A titre de variante, l'étape 40 peut ne pas être présente et les étapes 42 et 44 peuvent être exécutées à chaque cycle. Lorsque la consigne C ne varie pas, les premières commandes sont néanmoins déterminées à l'étape 42 pour suivre la valeur inchangée de la consigne C et ces premières commandes sont transmises à l'étape 44 par le circuit de commande maître BMS aux circuits de commande esclaves des étages E₁ à E_{N} par le bus de transmission de données BUS.

A l'étape 46, le circuit de commande maître BMS effectue une mise à jour partielle de la table de sélection comme cela est décrit plus en détails par la suite. Le procédé se poursuit à l'étape 48.

A l'étape 48, le circuit de commande maître BMS détermine si l'étape 46 de mise à jour de la table de sélection nécessite la transmission des deuxièmes commandes de connexion/déconnexion aux circuits de commande esclaves des étages E₁ à E_{N}. Si l'étape 46 de mise à jour partielle de la table de sélection ne nécessite pas la transmission des deuxièmes commandes de connexion/déconnexion, le procédé se poursuit à l'étape 40. Si l'étape 46 de mise à jour partielle de la table de sélection nécessite la transmission des deuxièmes commandes de connexion/déconnexion, le procédé se poursuit à l'étape 50.

A l'étape 50, le circuit de commande BMS détermine des deuxièmes commandes pour suivre la mise à jour de la table de sélection. Le procédé se poursuit à l'étape 52.

A l'étape 52, les deuxièmes données sont transmises par le circuit de commande maître BMS aux circuits de commande esclaves des étages E₁ à E_{N} par le bus de transmission de données BUS.

Selon un mode de réalisation, chaque table de sélection est stockée dans la mémoire MEM du circuit de commande maître BMS sous la forme d'un tableau, chaque ligne du tableau correspondant par exemple à une ligne de la mémoire MEM. Pour une batterie comprenant N cellules, chaque table de sélection comprend N lignes. Dans les exemples de tables de sélection décrits par la suite, N est égal à 160. La table de sélection comprend une première colonne, appelée "N° Cellule" par la suite, dans laquelle sont stockés des identifiants des cellules de la batterie. A titre d'exemple, pour une batterie comprenant N cellules, les identifiants de cellule vont de 1 à N. Chaque table de sélection comprend une deuxième colonne, appelée "Priorité", dans laquelle sont stockés les niveaux de priorité des cellules. A titre d'exemple, pour une batterie comprenant N cellules, les niveaux de priorité des cellules vont de 1 à N, le niveau de priorité "1" étant le plus important et le niveau de priorité "N" étant le moins important. Le circuit de commande maître BMS utilise des premier et deuxième pointeurs associés à la table de sélection. Le premier pointeur est appelé "pointeur de suivi de consigne" et le deuxième pointeur est appelé "pointeur de mise à jour". Ces pointeurs désignent chacun l'une des lignes de la table de sélection. Le pointeur de suivi de consigne est représentatif du nombre de cellules devant être connectées pour suivre la consigne C. Lorsque le pointeur de suivi de consigne désigne la ligne P de la table de sélection, où P varie de 1 à N, cela signifie que les cellules correspondant aux lignes 1 à P de la table de sélection doivent être connectées. Le pointeur de mise à jour est représentatif de l'avancée de la mise à jour de la table de sélection pour tenir compte de changements des niveaux de priorité des cellules. Lorsque le pointeur de suivi de consigne désigne la ligne Q de la table de sélection, où Q varie de 1 à N, cela signifie que la mise à jour des lignes 1 à Q-1 de la table de sélection a été réalisée et que les niveaux de priorité des cellules aux lignes 1 à Q-1 sont respectivement égaux de 1 à Q-1.

A des fins d'illustration, la table de sélection est représentée par la suite par un tableau dans lequel les deux premières colonnes correspondent aux colonnes "N° Cellule" et "Priorité" de la table de sélection. A des fins d'illustration, il a en outre été ajouté au tableau une troisième colonne intitulée "Connexion" dans laquelle il est indiqué, pour chaque ligne de la table de sélection, par le symbole "∘" que la cellule de la ligne doit être connectée et par le symbole "n" que la cellule de la ligne doit être déconnectée. Il a en outre été ajouté au tableau une quatrième colonne intitulée "Pointeur de suivi de consigne" dans laquelle il est indiqué par une croix "x" la ligne de la table de sélection désignée par le pointeur de suivi de consigne. Il a en outre été ajouté au tableau une cinquième colonne intitulée "Pointeur de mise à jour" dans laquelle il est indiqué par une croix "x" la ligne de la table de sélection désignée par le pointeur de mise à jour. Il a en outre été ajouté au tableau une sixième colonne intitulée "Ordre de connexion" dans laquelle il est indiqué les numéros des lignes de la table de sélection qui varient de 1 à N. Lorsqu'une mise à jour complète de la table de sélection est réalisée, les colonnes "Priorité" et "Ordre de connexion" sont identiques.

Un mode de réalisation d'un procédé d'utilisation de la table de sélection lors de la mise en oeuvre du procédé décrit précédemment en relation avec la figure 5 va maintenant être décrit dans le cas de réception d'une nouvelle consigne C par le circuit de commande maître BMS.

A titre d'exemple, on suppose que, avant la réception de la nouvelle consigne C, la table de sélection (de charge ou de décharge) peut être représentée par le tableau I suivant :

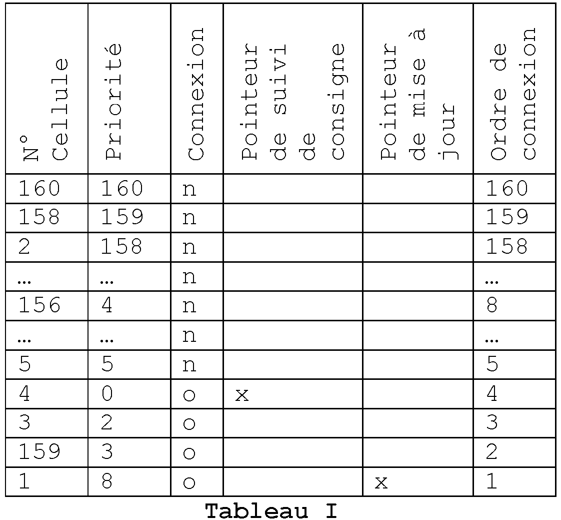

Dans le tableau I, le pointeur de suivi de consigne désigne la ligne 4 de la table de sélection, ce qui signifie que les cellules désignées par les lignes numérotées 1 à 4 de la table de sélection sont connectées, et le pointeur de de mise à jour désigne la ligne n°1 de la table de sélection, ce qui signifie qu'une mise à jour de la table de sélection doit être effectuée pour les lignes numérotées 1 à N.

A titre d'exemple, à l'étape 40, le circuit de commande maître reçoit une consigne pour connecter une cellule supplémentaire. A l'étape 42, le circuit de commande maître BMS déplace le pointeur de suivi de consigne d'un rang pour désigner la ligne n°5, comme cela est représenté dans le tableau II ci-dessous. Le circuit de commande maître BMS détermine alors des premières commandes pour connecter la cellule n°5 qui sont envoyées aux circuits de commande esclaves à l'étape 44.

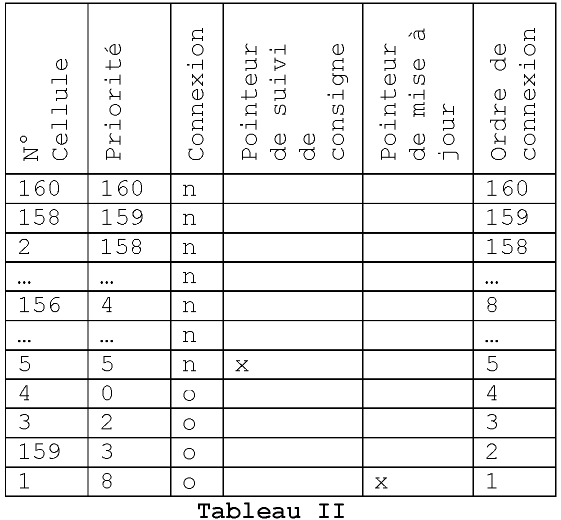

A l'étape 46, le circuit de commande maître BMS détermine que le niveau de priorité de la cellule désignée par le pointeur de mise à jour est égal à 8 alors que son ordre de connexion est égal à 1. Le circuit de commande maître BMS déplace cette cellule à l'ordre de connexion n°8 correspondant à son niveau de priorité et déplace la cellule qui se trouvait à l'ordre de connexion n°8 à l'ordre de connexion n°1. Ceci revient à intervertir dans la table de sélection les lignes n°1 et n°8, ce qui aboutit au tableau III ci-dessous.

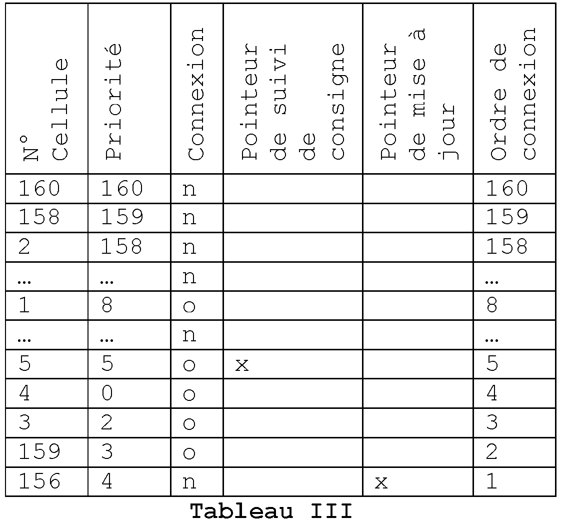

La permutation réalisée a introduit un "trou" de connexion pour le pointeur de suivi de consigne. Il ne doit pas y avoir de cellules connectées dans les lignes de la table de sélection de rang supérieur à la ligne désignée par le pointeur de suivi de consigne et il ne doit pas y avoir de cellules non connectées dans les lignes de la table de sélection de rang inférieur à la ligne désignée par le pointeur de suivi de consigne. Le circuit de commande maître BMS détermine alors à l'étape 50 des deuxièmes commandes pour connecter la cellule n°156 et déconnecter la cellule n°1, ce qui conduit au tableau IV ci-dessous. Ces deuxièmes commandes sont envoyées aux circuits de commande esclaves à l'étape 52 et le procédé se poursuit à l'étape 40.

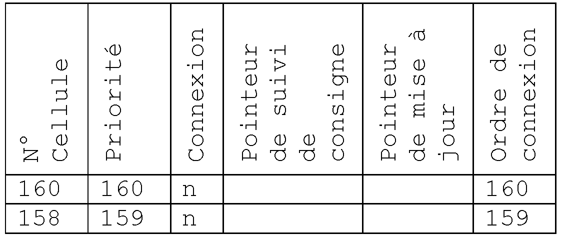

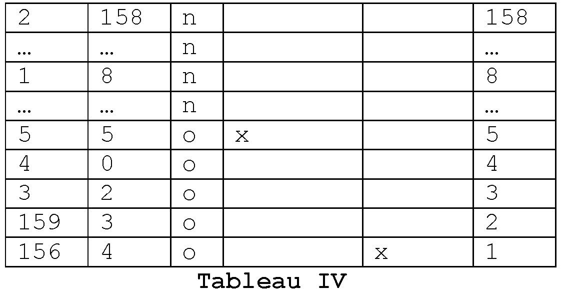

De façon avantageuse, le circuit de commande maître BMS traite une consigne avant de réaliser une mise à jour de la table de sélection. De ce fait on réalise une mise à jour avec l'état du système le plus à jour.

Pour simplifier les explications de la mise à jour de la table de sélection, on peut imaginer que la consigne ne change plus et ne fait donc plus évoluer le pointeur de suivi de consigne ni les états de connexion.

A l'étape 46 suivante, le circuit de commande maître BMS détermine que le niveau de priorité de la cellule désignée par le pointeur de mise à jour est égal à 4 alors que son ordre de connexion est égal à 1. Le circuit de commande maître BMS déplace cette cellule à l'ordre de connexion n°4 correspondant à son niveau de priorité et déplace la cellule qui se trouvait à l'ordre de connexion n°4 à l'ordre de connexion n°1. Ceci revient à intervertir dans la table de sélection les lignes n°1 et n°4, ce qui aboutit au tableau V ci-dessous. Il se trouve que cette permutation ne génère pas de trou dans les connexions, les deux cellules n°4 et n°156 étant connectées. Il n'y a pas de deuxième commande à envoyer et le procédé retourne à l'étape 40.

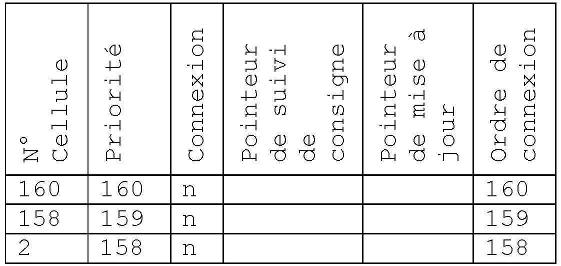

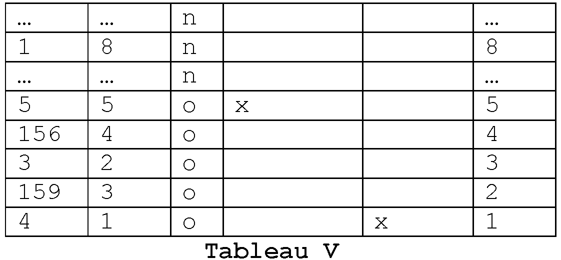

A l'étape 46 suivante, le circuit de commande maître BMS détermine que le niveau de priorité de la cellule désignée par le pointeur de mise à jour est égal à 1 et que son ordre de connexion est égal à 1. Cette cellule est donc bien placée dans la table de sélection. Le pointeur de mise à jour est alors incrémenté et désigne la ligne n°2 de la table de sélection comme cela est représenté sur le tableau VI ci-dessous. Il n'y a pas de deuxième commande à envoyer et le procédé retourne à l'étape 40.

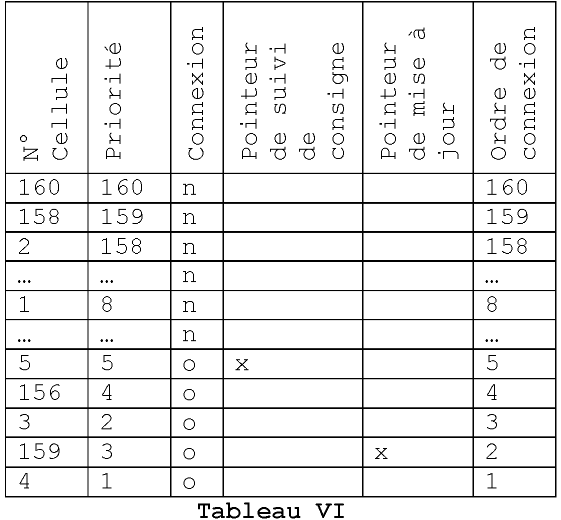

Au cycle suivant, on continue les mêmes opérations, avec cette fois un pointeur de mise à jour qui désigne la ligne n°2 de la table de sélection.

Selon un mode de réalisation, lorsque la mise à jour de la table de sélection est complètement réalisée, ce qui correspond à un pointeur de mise à jour égal à N, le circuit de commande maître BMS peut faire tourner le pointeur de mise à jour dans la table de sélection, sans faire d'autres actions, par exemple en incrémentant le pointeur de mise à jour pour qu'il désigne successivement les lignes 1 à N de la table de sélection, jusqu'à détection d'une incohérence entre l'ordre de connexion et le niveau de priorité de la cellule correspondante.

Un avantage du mode de réalisation décrit précédemment est la rapidité de la réponse de la batterie 5 lors d'une modification de la consigne.

Selon un mode de réalisation du procédé de transmission de données sur le bus BUS, une première ou deuxième commande transmise par le circuit de commande maître BMS est adressée au circuit de commande esclave 10 d'un seul module Eᵢ. Le circuit de commande esclave 10 de chaque module Eᵢ est alors adapté à déterminer si la commande qu'il reçoit lui est destiné. Si cela est le cas, le circuit de commande esclave 10 commande les circuits de pilotage 12 et 14 pour appliquer les ordres de connexion/déconnexion demandés par le circuit de commande maître BMS. A titre d'exemple, les commandes sont transmises sous la forme de trames, chaque trame comprenant un entête contenant l'adresse du module Eᵢ désigné suivi d'octets relatifs à la commande des interrupteurs, et éventuellement suivis d'au moins un octet de contrôle. Un avantage d'un tel mode de réalisation est que la réactivité de la batterie 5 à réception d'une nouvelle consigne C est optimale. En outre, les commutations des interrupteurs des modules Eᵢ sont étalées dans le temps de sorte que la génération de perturbations électromagnétiques est réduite. En outre, un contrôle d'erreur de trame efficace peut être mis en oeuvre.

Selon un autre mode de réalisation du procédé de transmission de données, chaque trame transmise par le circuit de commande maître BMS contient l'ensemble des ordres de connexion/déconnexion pour toutes les cellules Cₖ de tous les modules Eᵢ. Le circuit de commande esclave 10 de chaque module Eᵢ est donc sollicité à chaque trame envoyée par le circuit de commande maître BMS. Le circuit de commande esclave 10 de chaque module Eᵢ est adapté à analyser la trame et en extraire les ordres de connexion/déconnexion des interrupteurs appartenant au module Eᵢ.

Selon un autre mode de réalisation, la table de priorités de charge et la table de priorités de décharge peuvent être stockées au niveau de chaque module et c'est le circuit de commande esclave de chaque module qui, à partir du nombre total de cellules à connecter et de la table de priorités de charge lors d'une opération de charge et de la table de priorités de décharge lors d'une opération de décharge, détermine les cellules du module à connecter/déconnecter. Lorsque la table de priorités de charge et/ou de décharge est modifiée, le circuit de commande maître peut transmettre aux circuits de commande esclaves des deuxièmes données représentatives de la mise à jour de la table de priorités de charge et/ou de décharge.

Le circuit de commande maître BMS est adapté à déterminer les tables de priorités de charge et de décharge des cellules. Selon un mode de réalisation, chaque table de priorités de charge ou de décharge est stockée dans la mémoire MEM du circuit de commande maître BMS sous la forme d'un tableau, chaque ligne du tableau correspondant par exemple à une ligne de la mémoire MEM. Pour une batterie comprenant N cellules, chaque table de priorités comprend N lignes. Chaque table de priorités peut comprendre une première colonne dans laquelle sont stockés des identifiants des cellules de la batterie. A titre d'exemple, pour une batterie comprenant N cellules, les identifiants de cellule vont de 1 à N. Chaque table de priorités peut comprendre une deuxième colonne dans laquelle sont stockés les niveaux de priorité des cellules. A titre d'exemple, pour une batterie comprenant N cellules, les niveaux de priorité des cellules vont de 1 à N, le niveau de priorité "1" étant le plus important et le niveau de priorité "N" étant le moins important.

Le circuit de commande maître BMS met à jour chaque table de priorités lorsque les niveaux de priorité des cellules sont modifiés. A titre d'exemple, les niveaux de priorité des cellules peuvent être modifiés par le circuit de commande maître BMS notamment à partir des données mesurées par les capteurs des cellules.

Chaque circuit de commande esclave 10 comprend une mémoire pour le stockage de chaque table de priorités ou d'une partie de la table de priorités. Selon un mode de réalisation, le circuit de commande maître BMS envoie à chaque circuit de commande esclave 10 la totalité de chaque table de priorités qui est stockée dans la mémoire du circuit de commande esclave 10. Selon un autre mode de réalisation, le circuit de commande BMS envoie à chaque circuit de commande esclave 10 la partie de chaque table de priorités relative aux cellules commandées par le circuit de commande esclave 10. Chaque circuit de commande esclave 10 ne conserve alors en mémoire que la partie de chaque table de priorités qui le concerne. Dans la suite de la description, lorsque l'on parle d'une table de priorités mémorisée par un circuit de commande esclave 10, cela peut signifier la totalité de la table de priorités ou la partie de la table de priorités relatives aux cellules commandées par le circuit de commande esclave 10 selon le procédé de commande mis en oeuvre. Pour chaque module Eᵢ, le circuit de commande esclave 10 du module Eᵢ détermine à partir du nombre de cellules demandées par le circuit de commande maître BMS et des niveaux de priorité des cellules qui le composent, les cellules du module Eᵢ à connecter/déconnecter pour suivre la consigne C. Un avantage d'un tel mode de réalisation est que la réactivité de la batterie 10 à réception d'une nouvelle consigne C est optimale.

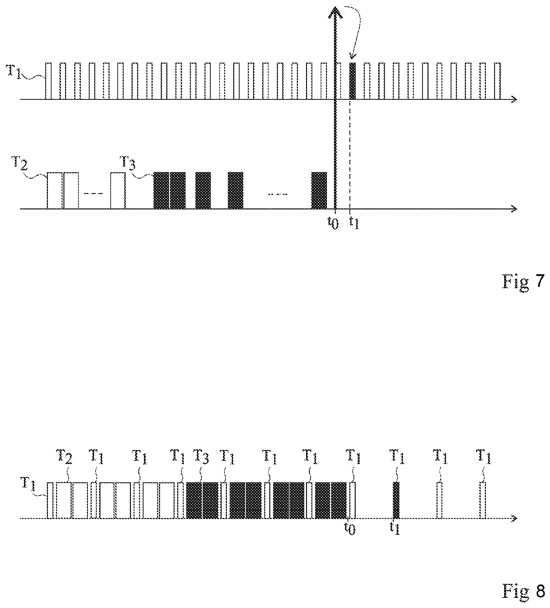

La figure 7 est un chronogramme illustrant les données échangées entre le circuit de commande maître BMS et les circuits de commande esclaves 10 de la batterie 60 représentée en figure 6 pour un mode de réalisation d'un procédé de commande de la batterie 60.

Selon le présent mode de réalisation du procédé de commande, les premières données sont transmises par le circuit de commande maître BMS sur le bus rapide BUSO. Les premières données peuvent être représentatives du nombre total de cellules en série souhaité entre les bornes Phase et Neutre de la batterie 60 lors les modules Eᵢ ont la configuration représentée en figure 2. Lorsque les cellules de chaque module peuvent être mis en série et/ou en parallèle, les premières données peuvent être représentatives de la configuration souhaitée des cellules. Les premières données peuvent être transmises sur le bus rapide BUSO sous la forme de trames T₁, émises par exemple de façon régulière.

Selon un mode de réalisation du procédé de transmission de données, chaque trame T₁ transmise par le circuit de commande maître BMS est à destination de tous les modules Eᵢ, i variant de 1 à N. Le circuit de commande esclave 10 de chaque module Eᵢ est donc sollicité à chaque trame envoyée par le circuit de commande maître BMS sur le bus rapide BUSO. Le circuit de commande esclave 10 de chaque module Eᵢ est adapté à analyser la trame T₁ pour en extraire la configuration de cellules souhaitée pour suivre la consigne C, par exemple le nombre de cellules à connecter en série.

Selon le présent mode de réalisation du procédé de commande, les deuxièmes données transmises par le circuit de commande maître BMS aux circuits de commande esclaves 10 sur le bus lent BUS1 peuvent être représentatives de la table de priorités de charge et/ou de décharge ou d'une partie de la table de priorités lorsque celle-ci est mise à jour. En particulier, une mise à jour de la table de priorités de charge et/ou de décharge peut être transmise par le circuit de commande maître BMS aux circuits de commande esclaves 10 à chaque modification de la table de priorités déterminée par le circuit de commande maître BMS. On a représenté en figure 7 des trames T₂ transmises par le circuit de commande maître BMS aux circuits de commande esclaves 10 sur le bus lent BUS1 et comprenant des données représentatives de la dernière version de la table de données. A titre d'exemple, dans le cas où est transmise à chaque module Eᵢ seulement la partie de la table de priorités relatives aux cellules contenues par le module Eᵢ, les deuxièmes données peuvent être transmises sous la forme de trames T₂, chaque trame T₂ comprenant un entête contenant l'adresse du module Eᵢ désigné suivi d'octets relatifs à la partie de la table de priorités relative au module Eᵢ, et éventuellement suivis d'au moins un octet de contrôle. Le circuit de commande esclave 10 de chaque module Eᵢ est alors adapté à déterminer si la commande qu'il reçoit lui est destiné. Selon un autre exemple, chaque trame T₂ est destinée à tous les modules Eᵢ. Le circuit de commande esclave 10 de chaque module Eᵢ est alors sollicité à chaque trame T₂ envoyée par le circuit de commande maître BMS sur le bus lent BUS1.

Le circuit de commande maître BMS associe un numéro à chaque version de la table de priorités de charge ou de décharge. A titre d'exemple, lorsque le circuit de commande maître BMS met à jour la table de priorités, il modifie le numéro de version associé à la nouvelle table de priorités. Selon un mode de réalisation, chaque trame T2 comprenant des données relatives à une table de priorités comprend en outre le numéro de version de la table de priorités.

Chaque circuit de commande esclave 10 est adapté à transmettre régulièrement au circuit de commande maître BMS le numéro de la version la plus récente de la table de priorités qui est stockée en mémoire. En figure 7, on a représenté par des trames T₃ en noir les données transmises par les circuits de commande esclaves 10 au circuit de commande maître BMS sur le bus lent BUS1 et comprenant les numéros des dernières versions des tables de priorités stockées par les circuits de commande esclaves.

En fonctionnement normal, en l'absence de mise à jour de la table de priorités, chaque circuit de commande esclave 10 a stocké dans la mémoire une table de priorités qui est utilisée pour déterminer les cellules à connecter/déconnecter. Lorsque le circuit de commande maître BMS met à jour la table de priorités, il transmet la table de priorités mise à jour avec le nouveau numéro de version aux circuits de commande esclaves 10. Chaque circuit de commande esclave 10 mémorise la nouvelle table de priorités tout en conservant en mémoire la version précédente de la table de priorités. Pour chaque module Eᵢ, lorsque le circuit de commande esclave 10 du module Eᵢ a mémorisé la nouvelle table de priorités, il transmet une trame T₃ au circuit de commande maître BMS contenant le numéro de la nouvelle version de la table de priorités ainsi que l'identifiant du module Eᵢ. Toutefois, le circuit de commande esclave 10 continue à traiter les premières données reçues sur le bus rapide BUS0 avec la version précédente de la table de priorités. Le circuit de commande esclave 10 a alors en mémoire la version précédente de la table de priorités et la nouvelle version de la table de priorités.

Le circuit de commande maître BMS détermine quel circuit de commande esclave 10 a reçu la nouvelle version de la table de priorités à partir des trames T₃ reçues. A l'instant t₀, le circuit de commande maître BMS a reçu une confirmation de réception de la nouvelle version de la table de priorités de chaque circuit de commande esclave 10. A l'instant t₁, le circuit de commande maître BMS commande aux circuits de commande esclaves 10 d'utiliser dorénavant la nouvelle version de la table de priorités. Selon un mode de réalisation dans lequel le circuit de commande maître BMS envoie une trame T₂ à tous les circuits de commande esclaves 10, le circuit de commande maître BMS peut mettre à "1" un bit particulier de la trame T₂, ce qui indique à chaque circuit de commande esclave 10 que la nouvelle version de la table de priorités doit être utilisée.

Selon un autre mode de réalisation, pour la détermination de la cellule à sélectionner ou des cellules à sélectionner, chaque circuit de commande esclave 10 peut mettre en oeuvre les procédés de sélection décrits dans les modes de réalisation précédents dans lesquels l'opération de sélection est réalisée par le circuit maître BMS. A titre d'exemple, chaque circuit de commande esclave 10 peut mettre en oeuvre un procédé de sélection utilisant des listes chaînées ou un procédé de sélection utilisant des tables de sélection.

La figure 8 est un chronogramme illustrant les données échangées entre le circuit de commande maître BMS et les circuits de commande esclaves 10 de la batterie 5 représentée en figure 1 pour un mode de réalisation d'un procédé de commande de la batterie 5.

Dans le présent mode de réalisation, les premières données et les deuxièmes données sont transmises sur le bus BUS. Selon un mode de réalisation, les trames T₁ relatives aux premières données sont transmises de façon prioritaire par rapport aux trames T₂ relatives aux deuxièmes données et par rapport aux trames T₃ relatives aux versions de tables de priorités utilisées par les modules Eᵢ. Le reste du procédé est identique à ce qui a été décrit précédemment en relation avec la figure 7. En particulier, à l'instant t₀, le circuit de commande maître BMS a reçu une confirmation de réception de la nouvelle version de la table de priorités de chaque circuit de commande esclave 10 et, à l'instant t₁, le circuit de commande maître BMS commande aux circuits de commande esclaves 10 d'utiliser dorénavant la nouvelle version de la table de priorités.

Des modes de réalisation particuliers de la présente invention ont été décrits. Diverses variantes et modifications apparaîtront à l'homme de l'art. Bien que la figure 2 représente un mode de réalisation d'agencement des cellules et des interrupteurs d'un module Eᵢ, il est clair que la structure de chaque module Eᵢ peut être différente. En particulier, la structure de chaque module Eᵢ peut correspondre à l'une des structures décrites dans la demande de brevet WO 2012/117110.

## Revendications

1. Procédé de commande d'un système électrique (5 ; 60) comprenant un premier circuit de commande (BMS) et plusieurs modules (Eᵢ) disposés en série entre des première et deuxième bornes (Phase, Neutre), chaque module (Eᵢ) comprenant des troisième et quatrième bornes (B+, B-), au moins l'une des troisième et quatrième bornes de chaque module étant reliée à l'une des troisième et quatrième bornes d'un autre module, chaque module comprenant des cellules électriques (C₁, C₂, C₃, C₄), correspondant chacune à un élément de stockage de charges électriques, et des interrupteurs reliant les cellules électriques entre elles et aux troisième et quatrième bornes du module et un deuxième circuit de commande (10) des interrupteurs, le système électrique comprenant en outre au moins un premier bus de transmission de données (BUS ; BUS0, BUS1) reliant le premier circuit de commande à chaque deuxième circuit de commande, le procédé est **caractérisé par** le fait de comprendre la détermination par le premier circuit de commande d'une première table de priorités associée à une opération de charge du système électrique et d'une deuxième table de priorités associée à une opération de décharge du système électrique, la deuxième table de priorités étant différente de la première table de priorités, la première table de priorités comprenant un premier classement de priorités des cellules électriques pour l'opération de charge selon au moins un premier critère et la deuxième table de priorités comprenant un deuxième classement de priorités des cellules électriques pour l'opération de décharge selon au moins un deuxième critère, le premier critère et le deuxième critère étant chacun choisi dans le groupe comprenant la température de la cellule électrique, le taux de charge de la cellule électrique, et la tension aux bornes de la cellule électrique, l'ordre des niveaux de priorité des cellules, du plus prioritaire ou au moins prioritaire, de la première table n'étant pas l'inverse de l'ordre des niveaux de priorité des cellules, du plus prioritaire ou au moins prioritaire, de la deuxième table, le procédé comprenant les étapes successives suivantes :
a) réception par le premier circuit de commande (BMS) d'une consigne (C) ; et
b) détermination de premières commandes de connexion ou de déconnexion d'au moins l'une des cellules électriques des modules pour suivre ladite consigne en fonction du premier classement lorsque le système électrique est en charge et en fonction du deuxième classement lorsque le système électrique est en décharge.

2. Procédé de commande selon la revendication 1, dans lequel la consigne est choisie dans le groupe comprenant une consigne de fourniture d'une tension entre les première et deuxième bornes (Phase, Neutre), une consigne de fourniture d'un courant à la première borne ou une consigne de nombre de cellules électriques.

3. Procédé selon la revendication 1 ou 2, dans lequel le système électrique comprend une mémoire (MEM) dans laquelle sont stockées des listes chaînées, chaque liste chaînée comprenant des éléments comprenant chacun un identifiant de l'une des cellules électriques et au moins un premier pointeur désignant un autre élément de la liste chaînée, une première liste chaînée parmi les listes chaînées étant associée à une opération de charge du système électrique (5) et une deuxième liste chaînée parmi les listes chaînées étant associée à une opération de décharge du système électrique, dans lequel l'étape b) comprend la détermination des premières commandes de connexion ou de déconnexion d'au moins l'une des cellules électriques des modules pour suivre ladite consigne à partir de la première liste chaînée lorsque le système électrique est en charge et de la deuxième liste chaînée lorsque le système électrique est en décharge.

4. Procédé de commande selon la revendication 3, comprenant la détermination par le premier circuit de commande (BMS), pour au moins un premier élément parmi les éléments de l'une des listes chaînées, d'une nouvelle valeur d'un deuxième pointeur désignant un deuxième élément de la liste chaînée ou un troisième élément d'une autre liste chaînée, et dans lequel l'étape b) comprend les étapes successives suivantes :
c) déterminer si les premier et deuxième pointeurs dudit élément sont différents ; et
d) dans le cas où les premier et deuxième pointeurs sont différents, remplacer le premier pointeur par le deuxième pointeur et déterminer des deuxièmes commandes de connexion ou de déconnexion de la cellule électrique correspondant à l'identifiant du premier élément.

5. Procédé de commande selon la revendication 4, dans lequel l'étape d) comprend, dans le cas de la connexion de la cellule électrique correspondant à l'identifiant du premier élément, la transmission de deuxièmes commandes de déconnexion de la cellule électrique correspondant à l'identifiant d'un cinquième élément et dans le cas de la déconnexion de la cellule électrique correspondant à l'identifiant du premier élément, la transmission de deuxièmes commandes de connexion de la cellule électrique correspondant à l'identifiant d'un cinquième élément.

6. Procédé selon la revendication 1 ou 2, dans lequel le premier circuit de commande comprend une mémoire (MEM) dans laquelle sont stockées, pour chaque cellule électrique, un identifiant de la cellule électrique, un premier niveau de priorité de connexion de la cellule électrique parmi des niveaux de priorité pour une opération de charge et un deuxième niveau de priorité de connexion de la cellule électrique parmi les niveaux de priorité pour une opération de décharge, dans lequel l'étape b) comprend les étapes successives suivantes :
e) transmission, par le premier circuit de commande aux deuxièmes circuits de commande, de premières commandes de connexion ou de déconnexion d'au moins l'une des cellules électriques des modules pour suivre ladite consigne ; et
f) transmission, par le premier circuit de commande aux deuxièmes circuits de commande, de deuxièmes commandes de connexion de l'une des cellules électriques et de déconnexion d'une autre cellule électrique parmi les cellules électriques.

7. Procédé de commande selon la revendication 6, dans lequel les lignes de la mémoire relatives aux premiers niveaux de priorité sont agencées selon des rangs croissants et les lignes de la mémoire relatives aux deuxièmes niveaux de priorité sont agencées selon des rangs croissants et dans lequel l'étape f) comprend les étapes successives suivantes :
g) intervertir des première et deuxième lignes de la mémoire si le niveau de priorité de la cellule électrique, parmi les premiers niveaux de priorité lors d'une opération de charge et parmi les deuxièmes niveaux de priorité lors d'une opération de décharge, à la première ligne est supérieur au rang de la première ligne ; et
h) transmettre, par le premier circuit de commande aux deuxièmes circuits de commande, les deuxièmes commandes de connexion de la cellule électrique ayant l'identifiant à la deuxième ligne avant l'interversion et de déconnexion de la cellule électrique ayant l'identifiant à la première ligne avant l'interversion dans le cas où la cellule électrique ayant l'identifiant à la deuxième ligne avant l'interversion est déconnectée et la cellule électrique ayant l'identifiant à la première ligne avant l'interversion est connectée.

8. Procédé de commande selon la revendication 6 ou 7, dans lequel le premier circuit de commande (BMS) utilise un premier pointeur désignant une troisième ligne de la mémoire (MEM) et dans lequel, à l'étape a), le circuit de commande (BMS) modifie le pointeur pour désigner une quatrième ligne de la mémoire, le nombre de lignes entre la troisième ligne et la quatrième ligne, en comptant la quatrième ligne, étant égal au nombre de cellules à connecter ou à déconnecter pour suivre la consigne.

9. Procédé de commande selon l'une quelconque des revendications 6 à 8, dans lequel le premier circuit de commande (BMS) utilise un deuxième pointeur désignant une cinquième ligne de la mémoire (MEM) et dans lequel le premier circuit de commande modifie le deuxième pointeur pour désigner une sixième ligne de la mémoire adjacente à la cinquième ligne lorsque le niveau de priorité de la cellule électrique à la cinquième ligne est égal au rang de la cinquième ligne.

10. Procédé selon la revendication 1 ou 2, comprenant la transmission, par le premier circuit de commande aux deuxièmes circuits de commande, de premières données (T₁) représentatives d'une configuration de cellules électriques à obtenir pour suivre une consigne (C) de fourniture d'une tension et/ou d'un courant entre les première et deuxième bornes, les deuxièmes circuit de commande connectant ou déconnectant les cellules électriques à partir desdites premières données et d'un premier classement de priorités des cellules électriques pour une opération de charge ou d'un deuxième classement de priorités des cellules électriques pour une opération de décharge, dans lequel le procédé comprend, en outre, les étapes suivantes :
i) détermination par le premier circuit de commande d'une nouvelle version du premier et/ou deuxième classement de priorités ;
j) transmission, par le premier circuit de commande à chaque deuxième circuit de commande, de deuxièmes données (T₂) représentatives d'au moins une partie de la nouvelle version du premier et/ou deuxième classement de priorités ;
k) transmission, par chaque deuxième circuit de commande au premier circuit de commande, de troisièmes données (T₃) indiquant la réception par le deuxième circuit de commande de ladite au moins une partie de la nouvelle version du premier et/ou deuxième classement de priorités ; et
l) transmission, par le premier circuit de commande aux deuxièmes circuits de commande, d'une commande d'utilisation de la nouvelle version du premier et/ou deuxième classement de priorités.

11. Système électrique (5 ; 60) comprenant un premier circuit de commande (BMS) et plusieurs modules (Eᵢ) disposés en série entre des première et deuxième bornes (Phase, Neutre), chaque module (Eᵢ) comprenant des troisième et quatrième bornes (B+, B-), au moins l'une des troisième et quatrième bornes de chaque module étant reliée à l'une des troisième et quatrième bornes d'un autre module, chaque module comprenant des cellules électriques (C₁, C₂, C₃, C₄), correspondant chacune à un élément de stockage de charges électriques, et des interrupteurs reliant les cellules électriques entre elles et aux troisième et quatrième bornes du module et un deuxième circuit de commande (10) des interrupteurs, le système électrique comprenant en outre au moins un premier bus de transmission de données (BUS ; BUS0, BUS1) reliant le premier circuit de commande à chaque deuxième circuit de commande, le système électrique comprenant une mémoire (MEM), le premier circuit de commande (BMS) étant **caractérisé par** le fait d'être configuré pour déterminer une première table de priorités associée à une opération de charge du système électrique et une deuxième table de priorités associée à une opération de décharge du système électrique, la deuxième table de priorités étant différente de la première table de priorités, la première table de priorités comprenant un premier classement de priorités des cellules électriques pour l'opération de charge selon au moins un premier critère et la deuxième table de priorités comprenant un deuxième classement de priorités des cellules électriques pour l'opération de décharge selon au moins un deuxième critère, le premier critère et le deuxième critère étant chacun choisi dans le groupe comprenant la température de la cellule électrique, le taux de charge de la cellule électrique, et la tension aux bornes de la cellule électrique, l'ordre des niveaux de priorité des cellules, du plus prioritaire ou au moins prioritaire, de la première table n'étant pas l'inverse de l'ordre des niveaux de priorité des cellules, du plus prioritaire ou au moins prioritaire, de la deuxième table, le premier circuit de commande étant configuré pour recevoir une consigne (C) et le premier circuit de commande ou chaque deuxième circuit de commande étant configuré pour déterminer des premières commandes de connexion ou de déconnexion d'au moins l'une des cellules électriques des modules pour suivre ladite consigne en fonction du premier classement lorsque le système électrique est en charge et en fonction du deuxième classement lorsque le système électrique est en décharge.

12. Système électrique selon la revendication 11, comprenant un deuxième bus de transmission de données (BUS1) reliant le premier circuit de commande à chaque deuxième circuit de commande, dans lequel le premier circuit de commande est configuré pour transmettre des premières données aux deuxièmes circuits de commande par le premier bus à un premier débit et est configuré pour transmettre des deuxièmes données aux deuxièmes circuits de commande par le deuxième bus à un deuxième débit inférieur au premier débit.

## Patentansprüche

1. Ein Verfahren zum Steuern eines elektrischen Systems (5; 60), das eine erste Steuerschaltung (BMS) und eine Vielzahl von Modulen (Eᵢ) aufweist, die in Reihe zwischen einem ersten und einem zweiten Anschluss (Phase, Neutral) angeordnet sind, wobei jedes Modul (Eᵢ) einen dritten und einen vierten Anschluss (B+, B-) aufweist, wobei wenigstens einer des dritten und des vierten Anschlusses jedes Moduls mit einem des dritten und des vierten Anschlusses eines anderen Moduls gekoppelt ist, wobei jedes Modul elektrische Zellen (C₁, C₂, C₃, C₄), die jeweils einem elektrischen Ladungsspeicherelement entsprechen, und Schalter, die die elektrischen Zellen miteinander und mit dem dritten und dem vierten Anschluss des Moduls koppeln, sowie eine zweite Schaltersteuerschaltung (10) aufweist, wobei das elektrische System ferner wenigstens einen ersten Datenübertragungsbus (BUS; BUS0, BUS1) aufweist, der die erste Steuerschaltung mit jeder zweiten Steuerschaltung koppelt, wobei das Verfahren **dadurch gekennzeichnet ist, dass** es das Bestimmen, durch die erste Steuerschaltung, einer ersten Prioritätstabelle, die einem Ladevorgang des elektrischen Systems zugeordnet ist, und einer zweiten Prioritätstabelle, die einem Entladevorgang des elektrischen Systems zugeordnet ist, aufweist, wobei die zweite Prioritätstabelle von der ersten Prioritätstabelle verschieden ist, wobei die erste Prioritätstabelle eine erste Klassifizierung der Prioritäten der elektrischen Zellen für den Ladevorgang nach wenigstens einem ersten Kriterium aufweist und die zweite Prioritätstabelle eine zweite Klassifizierung der Prioritäten der elektrischen Zellen für den Entladevorgang nach wenigstens einem zweiten Kriterium aufweist, wobei das erste Kriterium und das zweite Kriterium aus der Gruppe ausgewählt sind, die die Temperatur der elektrischen Zelle, den Ladezustand der elektrischen Zelle und die Spannung über der elektrischen Zelle aufweist, wobei die Reihenfolge der Prioritätsstufen der Zellen, von der höchsten Priorität zu der niedrigsten Priorität, der ersten Tabelle nicht die Umkehrung der Reihenfolge der Prioritätsstufen der Zellen, von der höchsten Priorität zu der niedrigsten Priorität, der zweiten Tabelle ist, wobei das Verfahren die folgenden aufeinanderfolgenden Schritte aufweist:
a) Empfangen, durch die erste Steuerschaltung (BMS), eines Sollwerts (C); und
b) Bestimmen erster Steuersignale zum Verbinden oder Trennen wenigstens einer der elektrischen Zellen der Module, um dem genannten Sollwert nach der ersten Klassifizierung zu folgen, wenn sich das elektrische System in einem Lademodus befindet, und nach der zweiten Klassifizierung, wenn sich das elektrische System in einem Entlademodus befindet.

2. Das Steuerverfahren nach Anspruch 1, wobei der Sollwert aus der Gruppe ausgewählt ist, die einen Sollwert für die Abgabe einer Spannung zwischen dem ersten und dem zweiten Anschluss (Phase, Neutral), einen Sollwert für die Abgabe eines Stroms an dem ersten Anschluss oder einen Sollwert für die Anzahl elektrischer Zellen aufweist.

3. Das Verfahren nach Anspruch 1 oder 2, wobei das elektrische System einen Speicher (MEM) aufweist, in dem verkettete Listen gespeichert sind, wobei jede verkettete Liste Elemente aufweist, die jeweils einen Identifikator einer der elektrischen Zellen und wenigstens einen ersten Zeiger aufweisen, der ein anderes Element in der verketteten Liste bezeichnet, wobei eine erste verkettete Liste unter den verketteten Listen einem Ladevorgang des elektrischen Systems (5) zugeordnet ist und eine zweite verkettete Liste unter den verketteten Listen einem Entladevorgang des elektrischen Systems zugeordnet ist, wobei Schritt b) das Bestimmen der ersten Steuersignale zum Verbinden oder Trennen einer der elektrischen Zellen der Module aufweist, um dem genannten Sollwert zu folgen, basierend auf der ersten verketteten Liste, wenn sich das elektrische System in einem Lademodus befindet, und auf der zweiten verketteten Liste, wenn sich das elektrische System in einem Entlademodus befindet.

4. Das Steuerverfahren nach Anspruch 3, das das Bestimmen, durch die erste Steuerschaltung (BMS), für wenigstens ein erstes Element unter den Elementen einer der verketteten Listen, eines neuen Werts eines zweiten Zeigers, der ein zweites Element in der verketteten Liste oder ein drittes Element in einer anderen verketteten Liste bezeichnet, aufweist, und wobei Schritt b) die folgenden aufeinanderfolgenden Schritte aufweist:
c) Bestimmen, ob der erste und der zweite Zeiger des genannten Elements verschieden sind; und
d) in dem Fall, in dem der erste und der zweite Zeiger verschieden sind, Ersetzen des ersten Zeigers durch den zweiten Zeiger und Bestimmen zweiter Steuersignale zum Verbinden oder Trennen der elektrischen Zelle, die dem Identifikator des ersten Elements entspricht.

5. Das Steuerverfahren nach Anspruch 4, wobei Schritt d) in dem Fall des Verbindens der elektrischen Zelle, die dem Identifikator des ersten Elements entspricht, das Übertragen zweiter Steuersignale zum Trennen der elektrischen Zelle, die dem Identifikator eines fünften Elements entspricht, und in dem Fall des Trennens der elektrischen Zelle, die dem Identifikator des ersten Elements entspricht, das Übertragen zweiter Steuersignale zum Verbinden der elektrischen Zelle, die dem Identifikator eines fünften Elements entspricht, aufweist.

6. Das Verfahren nach Anspruch 1 oder 2, wobei die erste Steuerschaltung einen Speicher (MEM) aufweist, in dem für jede elektrische Zelle ein Identifikator der elektrischen Zelle, eine erste Prioritätsstufe für das Verbinden der elektrischen Zelle unter Prioritätsstufen für einen Ladevorgang und eine zweite Prioritätsstufe für das Verbinden der elektrischen Zelle unter Prioritätsstufen für einen Entladevorgang gespeichert sind, wobei Schritt b) die folgenden aufeinanderfolgenden Schritte aufweist:
e) Übertragen, durch die erste Steuerschaltung an die zweiten Steuerschaltungen, erster Steuersignale zum Verbinden oder Trennen wenigstens einer der elektrischen Zellen der Module, um dem genannten Sollwert zu folgen; und
f) Übertragen, durch die erste Steuerschaltung an die zweiten Steuerschaltungen, zweiter Steuersignale zum Verbinden einer der elektrischen Zellen und zum Trennen einer anderen elektrischen Zelle unter den elektrischen Zellen.

7. Das Steuerverfahren nach Anspruch 6, wobei die Speicherzeilen bezüglich der ersten Prioritätsstufe nach aufsteigenden Rängen angeordnet sind und die Speicherzeilen bezüglich der zweiten Prioritätsstufen nach aufsteigenden Rängen angeordnet sind und wobei Schritt f) die folgenden aufeinanderfolgenden Schritte aufweist:
g) Austauschen einer ersten und einer zweiten Speicherzeile, wenn die Prioritätsstufe der elektrischen Zelle, unter den ersten Prioritätsstufen während eines Ladevorgangs und unter den zweiten Prioritätsstufen während eines Entladevorgangs, an der ersten Zeile höher als der Rang der ersten Zeile ist; und
h) Übertragen, durch die erste Steuerschaltung an die zweiten Steuerschaltungen, der zweiten Steuersignale zum Verbinden der elektrischen Zelle mit dem Identifikator an der zweiten Zeile vor dem Austausch und zum Trennen der elektrischen Zelle mit dem Identifikator an der ersten Zeile vor dem Austausch, in dem Fall, in dem die elektrische Zelle mit dem Identifikator an der zweiten Zeile vor dem Austausch getrennt ist und die elektrische Zelle mit dem Identifikator an der ersten Zeile vor dem Austausch verbunden ist.

8. Das Steuerverfahren nach Anspruch 6 oder 7, wobei die erste Steuerschaltung (BMS) einen ersten Zeiger verwendet, der eine dritte Zeile in dem Speicher (MEM) bezeichnet, und wobei in Schritt a) die Steuerschaltung (BMS) den Zeiger modifiziert, um eine vierte Zeile in dem Speicher zu bezeichnen, wobei die Anzahl von Zeilen zwischen der dritten Zeile und der vierten Zeile, unter Einbeziehung der vierten Zeile, gleich der Anzahl von Zellen ist, die verbunden oder getrennt werden sollen, um dem Sollwert zu folgen.

9. Das Steuerverfahren nach einem der Ansprüche 6 bis 8, wobei die erste Steuerschaltung (BMS) einen zweiten Zeiger verwendet, der eine fünfte Zeile in dem Speicher (MEM) bezeichnet, und wobei die erste Steuerschaltung den zweiten Zeiger modifiziert, um eine sechste Zeile in dem Speicher zu bezeichnen, die zu der fünften Zeile benachbart ist, wenn die Prioritätsstufe der elektrischen Zelle an der fünften Zeile gleich dem Rang der fünften Zeile ist.

10. Das Verfahren nach Anspruch 1 oder 2, das das Übertragen, durch die erste Steuerschaltung an die zweiten Steuerschaltungen, erster Daten (T₁) aufweist, die für eine Konfiguration elektrischer Zellen repräsentativ sind, die erhalten werden soll, um einem Sollwert (C) für die Abgabe einer Spannung und/oder eines Stroms zwischen dem ersten und dem zweiten Anschluss zu folgen, wobei die zweiten Steuerschaltungen die elektrischen Zellen basierend auf den genannten ersten Daten und auf einer ersten Klassifizierung der Prioritäten der elektrischen Zellen für einen Ladevorgang oder auf einer zweiten Klassifizierung der Prioritäten elektrischer Zellen für einen Entladevorgang verbinden oder trennen, wobei das Verfahren ferner die folgenden Schritte aufweist:
i) Bestimmen, durch die erste Steuerschaltung, einer neuen Version der ersten und/oder zweiten Prioritätsklassifizierung;
j) Übertragen, durch die erste Steuerschaltung an jede zweite Steuerschaltung, zweiter Daten (T₂), die für wenigstens einen Abschnitt der neuen Version der ersten und/oder zweiten Prioritätsklassifizierung repräsentativ sind;
k) Übertragen, durch jede zweite Steuerschaltung an die erste Steuerschaltung, dritter Daten (T₃), die den Empfang des genannten wenigstens einen Abschnitts der neuen Version der ersten und/oder zweiten Prioritätsklassifizierung durch die zweite Steuerschaltung anzeigen; und
l) Übertragen, durch die erste Steuerschaltung an die zweiten Steuerschaltungen, eines Befehls zum Verwenden der neuen Version der ersten und/oder zweiten Prioritätsklassifizierung.

11. Ein elektrisches System (5; 60), das eine erste Steuerschaltung (BMS) und eine Vielzahl von Modulen (Eᵢ) aufweist, die in Reihe zwischen einem ersten und einem zweiten Anschluss (Phase, Neutral) angeordnet sind, wobei jedes Modul (Eᵢ) einen dritten und einen vierten Anschluss (B+, B-) aufweist, wobei wenigstens einer des dritten und des vierten Anschlusses jedes Moduls mit einem des dritten und des vierten Anschlusses eines anderen Moduls gekoppelt ist, wobei jedes Modul elektrische Zellen (C₁, C₂, C₃, C₄), die jeweils einem elektrischen Ladungsspeicherelement entsprechen, und Schalter, die die elektrischen Zellen miteinander und mit dem dritten und dem vierten Anschluss des Moduls koppeln, sowie eine zweite Schaltersteuerschaltung (10) aufweist, wobei das elektrische System ferner wenigstens einen ersten Datenübertragungsbus (BUS; BUS0, BUS1) aufweist, der die erste Steuerschaltung mit jeder zweiten Steuerschaltung koppelt, wobei das elektrische System einen Speicher (MEM) aufweist, wobei die erste Steuerschaltung (BMS) **dadurch gekennzeichnet ist, dass** sie eingerichtet ist, eine erste Prioritätstabelle, die einem Ladevorgang des elektrischen Systems zugeordnet ist, und eine zweite Prioritätstabelle, die einem Entladevorgang des elektrischen Systems zugeordnet ist, zu bestimmen, wobei die zweite Prioritätstabelle von der ersten Prioritätstabelle verschieden ist, wobei die erste Prioritätstabelle eine erste Klassifizierung der Prioritäten der elektrischen Zellen für den Ladevorgang nach wenigstens einem ersten Kriterium und eine zweite Klassifizierung der Prioritäten der elektrischen Zellen für den Entladevorgang nach wenigstens einem zweiten Kriterium aufweist, wobei das erste Kriterium und das zweite Kriterium aus der Gruppe ausgewählt sind, die die Temperatur der elektrischen Zelle, den Ladezustand der elektrischen Zelle und die Spannung über der elektrischen Zelle aufweist, wobei die Reihenfolge der Prioritätsstufen der Zellen, von der höchsten Priorität zu der niedrigsten Priorität, der ersten Tabelle nicht die Umkehrung der Reihenfolge der Prioritätsstufen der Zellen, von der höchsten Priorität zu der niedrigsten Priorität, der zweiten Tabelle ist, wobei die erste Steuerschaltung eingerichtet ist, einen Sollwert (C) zu empfangen, und wobei die erste Steuerschaltung oder jede zweite Steuerschaltung eingerichtet ist, erste Steuersignale zum Verbinden oder Trennen wenigstens einer der elektrischen Zellen der Module zu bestimmen, um dem genannten Sollwert nach der ersten Klassifizierung zu folgen, wenn sich das elektrische System in einem Lademodus befindet, und nach der zweiten Klassifizierung, wenn sich das elektrische System in einem Entlademodus befindet.

12. Das elektrische System nach Anspruch 11, das einen zweiten Datenübertragungsbus (BUS1) aufweist, der die erste Steuerschaltung mit jeder zweiten Steuerschaltung koppelt, wobei die erste Steuerschaltung eingerichtet ist, erste Daten über den ersten Bus mit einer ersten Rate an die zweiten Steuerschaltungen zu übertragen, und eingerichtet ist, zweite Daten über den zweiten Bus mit einer zweiten Rate, die kleiner als die erste Rate ist, an die zweiten Steuerschaltungen zu übertragen.

## Claims

1. A method of controlling an electric system (5; 60) comprising a first control circuit (BMS) and a plurality of modules (Eᵢ) arranged in series between first and second terminals (Phase, Neutral), each module (Eᵢ) comprising third and fourth terminals (B+, B-), at least one of the third and fourth terminals of each module being coupled to one of the third and fourth terminals of another module, each module comprising electric cells (C₁, C₂, C₃, C₄) each corresponding to an electric charge storage element, and switches coupling the electric cells to one another and to the third and fourth terminals of the module and a second switch control circuit (10), the electric system further comprising at least a first data transmission bus (BUS; BUS0, BUS1) coupling the first control circuit to each second control circuit, the method being **characterized by** comprising the determination by the first control circuit of a first priority table associated with an operation of charge of the electric system and of a second priority table associated with an operation of discharge of the electric system, the second priority table being different form the first priority table, the first priority table comprising a first classification of the priorities of the electric cells for the charge operation according to at least a first criterium and the second priority table comprising a second classification of the priorities of the electric cells for the discharge operation according to at least a second criterium, the first criterium and the second criterium being selected in the group comprising the temperature of the electric cell, the state of charge of the electric cell, and the voltage across the electric cell, the order of the priority levels of the cells, from the highest priority to the lowest priority, of the first table not being the inverse of the order of the priority levels of the cells, from the highest priority to the lowest priority, of the second table, the method comprising the successive steps of:
a) reception by the first control circuit (BMS) of a set point (C); and
b) determination of first control signals for the connection or the disconnection of at least one of the electric cells of the modules to follow said set point according to the first classification when the electric system is in charge mode and according to the second classification when the electric system is in discharge mode.

2. The control method according to claim 1, wherein the set point is selected from the group comprising a set point for the delivery of a voltage between the first and second terminals (Phase, Neutral), a set point for the delivery of a current at the first terminal, or a set point for the number of electric cells.

3. The method according to claim 1 or 2, wherein the electric system comprises a memory (MEM) having chained lists stored therein, each chained list comprising elements each comprising an identifier of one of the electric cells and at least a first pointer designating another element in the chained list, a first chained list among the chained lists being associated with an operation of charge of the electric system (5) and a second chained list among the chained lists being associated with an operation of discharge of the electric system, wherein step b) comprises the determination of the first control signals for the connection or the disconnection of one of the electric cells of the modules to follow said set point based on the first chained list when the electric system is in charge mode and on the second chained list when the electric system is in discharge mode.

4. The control method according to claim 3, comprising the determination by the first control circuit (BMS), for at least one first element among the elements of one of the chained lists, of a new value of a second pointer designating a second element in the chained list or a third element in another chained list, and wherein step b) comprises the successive steps of:
c) determining whether the first and second pointers of said element are different; and
d) in the case where the first and second pointers are different, replacing the first pointer with the second pointer and determining second control signals for the connection or the disconnection of the electric cell corresponding to the identifier of the first element.

5. The control method according to claim 4, wherein step d) comprises, in the case of the connection of the electric cell corresponding to the identifier of the first element, the transmission of second control signals for the disconnection of the electric cell corresponding to the identifier of a fifth element and in the case of the disconnection of the electric cell corresponding to the identifier of the first element, the transmission of second control signals for the connection of the electric cell corresponding to the identifier of a fifth element.

6. The method according to claim 1 or 2, wherein the first control circuit comprises a memory (MEM) having, for each electric cell, an identifier of the electric cell, a first priority level for the connection of the electric cell among priority levels for a charge operation, and a second priority level for the connection of the electric cell among priority levels for a discharge operation stored therein, wherein step b) comprises the successive step of:
e) transmission, by the first control circuit to the second control circuits, of first control signals for the connection or the disconnection of at least one of the electric cells of the modules to follow said set point; and
f) transmission, by the first control circuit to the second control circuits, of second control signals for the connection of one of the electric cells and the disconnection of another electric cells among the electric cells.

7. The control method according to claim 6, wherein the memory rows relative to the first priority level are arranged by increasing ranks and the memory rows relative to the second priority levels are arranged by increasing ranks and wherein step f) comprise the successive steps of:
g) exchanging first and second memory rows if the priority level of the electric cell, among the first priority levels during a charge operation and among the second priority levels during a discharge operation, at the first row is higher than the rank of the first row; and
h) transmission, by the first control circuit to the second control circuits, of the second control signals for the connection of the electric cell having the identifier at the second row before the exchange and for the disconnection of the electric cell having the identifier at the first row before the exchange in the case where the electric cell having the identifier at the second row before the exchange is disconnected and the electric cell having the identifier at the first row before the exchange is connected.

8. The control method according to claim 6 or 7, wherein the first control circuit (BMS) uses a first pointer designating a third row in the memory (MEM) and wherein, at step a), the control circuit (BMS) modifies the pointer to designate a fourth row in the memory, the number of rows between the third row and the fourth row, counting the fourth row, being equal to the number of cells to be connected or to be disconnected to follow the set point.

9. The control method according to any of claims 6 to 8, wherein the first control circuit (BMS) uses a second pointer designating a fifth row in the memory (MEM) and wherein the first control circuit modifies the second pointer to designate a sixth row in the memory adjacent to the fifth row when the priority level of the electric cell at the fifth row is equal to the rank of the fifth row.

10. The method according to claim 1 or 2, comprising the transmission, by the first control circuit to the second control circuits, of first data (T₁) representative of an electric cell configuration to be obtained to follow a set point (C) for the delivery of a voltage and/or of a current between the first and second terminals, the second control circuits connecting or disconnecting the electric cells based on said first data and on a first classification of the priorities of the electric cells for a charge operation or on a second classification of the priorities of electric cells for a discharge operation, wherein the method further comprises the steps of:
i) determination by the first control circuit of a new version of the first and/or second priority classification;
j) transmission, by the first control circuit to each second control circuit, of second data (T₂) representative of at least a portion of the new version of the first and/or second priority classification;
k) transmission, by each second control circuit to the first control circuit, of third data (T₃) indicating the reception by the second control circuit of said at least a portion of the new version of the first and/or second priority classification; and
l) transmission, by the first control circuit to the second control circuits, of an order to use the new version of the first and/or second priority classification.

11. An electric system (5; 60) comprising a first control circuit (BMS) and a plurality of modules (Eᵢ) arranged in series between first and second terminals (Phase, Neutral), each module (Eᵢ) comprising third and fourth terminals (B+, B-), at least one of the third and fourth terminals of each module being coupled to one of the third and fourth terminals of another module, each module comprising electric cells (C₁, C₂, C₃, C₄), each corresponding to an electric charge storage element, and switches coupling the electric cells to one another and to the third and fourth terminals of the module and a second switch control circuit (10), the electric system further comprising at least a first data transmission bus (BUS; BUS0, BUS1) coupling the first control circuit to each second control circuit, the electric system comprising a memory (MEM), the first control circuit (BMS) being **characterized by** being configured to determine a first priority table associated with an operation of charge of the electric system and a second priority table associated with an operation of discharge of the electric system, the second priority table being different from the first priority table, the first priority table comprising a first classification of the priorities of the electric cells for the charge operation according to at least a first criterium and a second classification of the priorities of the electric cells for the discharge operation according to at least a second criterium, the first criterium and the second criterium being selected in the group comprising the temperature of the electric cell, the state of charge of the electric cell, and the voltage across the electric cell, the order of the priority levels of the cells, from the highest priority to the lowest priority, of the first table not being the inverse of the order of the priority levels of the cells, from the highest priority to the lowest priority, of the second table, the first control circuit being configured to receive a set point (C) and the first control circuit or each second control circuit being configured to determine first control signals for the connection or the disconnection of at least one of the electric cells of the modules to follow said set point according to the first classification when the electric system is in charge mode and according to the second classification when the electric system is in discharge mode.

12. The electric system according to claim 11, comprising a second data transmission bus (BUS1) coupling the first control circuit to each second control circuit, wherein the first control circuit is configured to transmit first data to the second control circuits over the first bus at a first rate and is configured to transmit second data to the second control circuits over the second bus at a second rate smaller than the first rate.
